# EUROPÄISCHE PATENTSCHRIFT

(11) **EP 3 837 311 B1**
(45) Veröffentlichungstag und Bekanntmachung des Hinweises auf die Patenterteilung: **10.08.2022**
(21) Anmeldenummer: 19755324.1
(22) Anmeldetag: 12.08.2019
(51) Int. Cl.: C08K 5/5317, C08K 5/5357, C07F 9/38, C08K 5/5353, C07F 9/40

(54) **POLYMERZUSAMMENSETZUNG MIT PHOSPHONATFLAMMSCHUTZMITTEL**
POLYMER COMPOSITION CONTAINING A PHOSPHONATE FLAME RETARDANT
COMPOSITION POLYMÈRE COMPRENANT UN RETARDATEUR DE FLAMME CONTENANT DU PHOSPHONATE

(30) Priorität: 15.08.2018 DE 102018119835
(43) Veröffentlichungstag der Anmeldung: 23.06.2021
(73) Patentinhaber: Chemische Fabrik Budenheim KG, 55257 Budenheim (DE)
(72) Erfinder: FASSBENDER, Birgit, 55122 Mainz (DE); FUTTERER, Thomas, 55218 Ingelheim (DE); WERMTER, Hendrik, 65346 Eltville (DE); WEISS, Herbert, 71665 Vaihingen an der Enz (DE); RAMSEY, Christoph, 55218 Ingelheim (DE); ACKERMANN, Niklas, 55246 Mainz-Kostheim (DE)
(74) Vertreter: WSL Patentanwälte Partnerschaft mbB
(86) Internationale Anmeldenummer: PCT/EP2019/071616
(87) Internationale Veröffentlichungsnummer: WO 2020/035458

(56) Entgegenhaltungen:
- US-A- 4 873 180
- US-A- 5 276 066
- CHUANCHUAN LIU ET AL: "Design and Synthesis of Efficient Phosphorus Flame Retardant for Polycarbonate", INDUSTRIAL & ENGINEERING CHEMISTRY RESEARCH, Bd. 56, Nr. 31, 25. Juli 2017 (2017-07-25) , Seiten 8789-8796, XP055631138, ISSN: 0888-5885, DOI: 10.1021/acs.iecr.7b01915

## Beschreibung

### GEGENSTAND DER ERFINDUNG

Die Erfindung betrifft eine Zusammensetzung enthaltend ein Polymermaterial und ein phosphorhaltiges Flammschutzmittel auf Basis eines Aminomethylbisphosphonates, ein Verfahren zur Herstellung der Zusammensetzung, die Verwendung des Flammschutzmittels sowie ausgewählte Strukturen des Flammschutzmittels.

### HINTERGRUND DER ERFINDUNG

Zur Flammschutzausrüstung von Polymermaterialien sind zahlreiche Substanzen bekannt, die alleine oder in Kombination mit weiteren Substanzen eingesetzt werden können, die ähnliche oder sich ergänzende Flammschutzeigenschaften bereitstellen. Zu den bekanntesten Flammschutzmitteln zählen halogenierte organische Verbindungen, Metallhydroxide, organische oder anorganische Phosphate, Phosphonate oder Phosphinate sowie Derivate von 1,3,5-Triazinverbindungen und Mischungen davon. Unter diesen Flammschutzmitteln kann zwischen niedermolekularen und hochmolekularen unterschieden werden. Zwar weisen hochmolekulare, d.h. polymere Flammschutzmittel wie das halogenierte Polyol Exolit OP 550 der Fa. Clariant vorteilhaft nur geringfügige Weichmacher-Effekte und ein geringes Migrationsvermögen im Polymermaterial auf, allerdings sind sie im Gegensatz zu den niedermolekularen Flammschutzadditiven bei der technischen Verarbeitung oftmals schlechter mit dem zu schützenden Polymermaterial mischbar, insbesondere bei geringer Schmelzfähigkeit. Weiterhin kann die Aushärtung des Polymermaterials durch Zusatz des hochmolekularen Flammschutzmittels negativ beeinflusst werden.

Bei einem Großteil der eingesetzten Flammschutzmittel handelt es sich daher um niedermolekulare Verbindungen. Auf diesem Gebiet sind u.a. phosphorhaltige Verbindungen als besonders effizient bekannt. Diese können sich in Polymermaterialien im Brandfall zu voluminösen Schutzschichten aufblähen, was als Intumeszenz bezeichnet wird. Hierdurch wird eine die Sauerstoffzufuhr hemmende Isolierschicht gebildet, die ein Weiterbrennen des Polymermaterials verhindert. Weiterhin kann die flammhemmende Wirkung in der Festphase auf einer Erhöhung der Verkohlungsrate des Polymermaterials oder der Bildung von anorganischen Gläsern basieren. Zur flammhemmenden Aktivität trägt auch ein Gasphasenmechanismus bei, bei dem der Verbrennungsvorgang des Polymermaterials durch Radikalkombinationen mit PO-Radikalen, die aus der Verbrennung der Phosphorverbindung entstehen, stark verlangsamt wird. Die wichtigsten phosphorhaltigen Verbindungen stellen die halogenierten Phosphate Tris(2-chlorethyl)phosphat (TCEP) und Tris(2-chlorisopropyl)phosphat (TCPP) dar. Deren Einsatz wird jedoch aufgrund der potentiellen Toxizität und der ökologischen Probleme, die mit deren Verwendung einhergehen, zunehmend eingeschränkt, insbesondere weil derartige Phosphate einer Bioakkumulation unterliegen, kommunale Kläranlagen diese jedoch nur schwer aus dem Abwasser abtrennen können. Weiterhin sind sie halogenhaltig, was im Brandfall zur Entstehung und Freisetzung von HX-Gasen und weiteren toxischen Verbindungen führt. Insbesondere im Elektronikbereich stellen derartige korrosive Brandgase ein hohes Risiko dar.

Eine Alternative zu phosphathaltigen Flammschutzmitteln sind halogenierte und halogenfreie Phosphonate. Diese weisen im Vergleich zu den Phosphaten eine besonders ausgeprägte flammhemmende Gasphasenaktivität auf. Die DE 2 128 060 beschreibt den Einsatz von Aminomethanphosphonsäureestern mit einem Phosphorgehalt von bis zu 23,2 Gew-% als Flammschutzmittel in Polyurethanen. Die Aminomethanphosphonsäureester werden aus Hexamethylentetramin und Dialkyl- oder Diarylphosphonaten hergestellt. Zur Anwendung dieser Phosphonate werden diese zusammen mit weiteren gegebenenfalls erforderlichen Zusatzmitteln in der Polyolkomponente eines Polyurethanbildungsgemisches gelöst und hierzu ein Polyisocyanat gegeben. Die NH-Gruppen enthaltenden Ester werden durch eine Addition an die Isocyanatgruppe in das Polymermaterial inkorporiert.

Die EP 0 001 996 betrifft die Herstellung von *N,N*-Bis-(2-hydroxylalkyl)aminomethan-phosphon-säuredimethylestern, die hauptsächlich als flammhemmende Zusätze in Polymermaterialien, insbesondere in Polyurethanen, eingesetzt werden. Zu deren Synthese wird einem Gemisch aus Dimethylphosphit und Oxazolidin eine H-acide Verbindung als Katalysator zugesetzt. Die Produkte weisen eine endständige sekundäre Hydroxylgruppe auf und können so bei Zugabe zur Polyolkomponente eines Polyurethanbildungsgemisches in das Polymermaterial eingearbeitet werden. Die zugesetzten H-aciden Stoffe verbleiben dann jedoch im Polymermaterial, was zu einer Beeinträchtigung der Eigenschaften führen kann. Alternativ müssen sie vor Zugabe zur Polyolkomponente in ihre entsprechenden Alkalisalze überführt werden, um sie von den Phosphonsäureestern trennen zu können.

Die CA 2 027 078 betrifft Aminomethanphosphonsäurearylester, die als Flammschutzmittel in Schäumen, Thermoplasten und Duroplasten eingesetzt werden können. Die entsprechenden Verbindungen werden durch Reaktion eines Amins mit Trialkyl- oder Triarylphosphiten und Paraformaldehyd hergestellt. Die Produkte können entweder im Extrusionsprozess dem zu verarbeitenden Polymermaterial zugesetzt werden oder als Additiv der Co-Kondensationskomponente in einer Polykondensationsreaktion dienen.

Aus Liu et al., Ind. Eng. Chem. Res. (2017), 56, 8789-8696 sind DOPO-Derivate mit Flammschutzwirkung bekannt, die aus DOPO (9,10- Dihydro-9-oxa-10-phosphaphenanthrene-10-oxide), Paraformaldehyd und Piperazin hergestellt werden. Diese sind halogenfrei und besitzen eine flammhemmende Wirkung beim Einsatz in Polycarbonaten. Allerdings weisen auch diese Verbindungen, wie die der vorgenannten Dokumente, nur eine geringe thermische Stabilität auf, die auf die schwache P-C-Bindung der P-CH₂N-Gruppe zurückzuführen ist. Zwar ist die P-C-Bindung chemisch und thermisch grundsätzlich stabil, allerdings stabilisiert die α-Aminogruppe das durch die Homolyse entstehende Kohlenstoffradikal, sodass die Spaltung der P-C-Bindung in diesen Flammschutzmitteln bereits bei relativ niedrigen Temperaturen abläuft. Da das tertiäre Amin, das sich durch die Homolyse bildet, eine geringe Molmasse aufweist, entweicht dieses als flüchtige Komponente und verursacht einen entsprechenden Masseverlust. Ist das Flammschutzmittel in ein Polymermaterial eingebettet, können sich durch die Freisetzung des Amins verstärkt Rauchgase bilden. Aufgrund der niedrigen Zersetzungstemperatur werden die Flammschutzmittel teilweise bereits beim Formungsprozess des Polymermaterials, in das sie eingearbeitet werden, abgebaut. Ein weiterer Nachteil dieser Flammschutzmittel ist, dass sie aufgrund ihres geringen Phosphoranteils dem Polymermaterial in hohen Konzentrationen zugesetzt werden müssen, wodurch Verarbeitbarkeit, Flexibilität und weitere Produkteigenschaften des Polymermaterials erheblich beeinträchtigt werden.

### AUFGABE

Vor diesem Hintergrund bestand die Aufgabe der vorliegenden Erfindung daher darin, eine Zusammensetzung mit einem Polymermaterial bereitzustellen, welche ein halogenfreies Flammschutzmittel mit ähnlichen oder sogar besseren Flammschutzeigenschaften als die aus dem Stand der Technik bekannten aufweist, das in geringeren Konzentrationen in der Zusammensetzung bei gleichzeitig guter flammhemmender Wirkung einsetzbar ist, das sich erst bei höheren Temperaturen als die bekannten Flammschutzmittel, vorzugsweise weit oberhalb der Verarbeitungs- und/oder Herstelltemperatur und kurz unterhalb oder bei der Zersetzungstemperatur des Polymermaterials, zersetzt und bei dessen Zersetzung im Polymermaterial eine geringere Rauchgasdichte und/oder eine niedrigere Rauchgastoxizität auftritt.

### BESCHREIBUNG DER ERFINDUNG

Diese Aufgabe wird erfindungsgemäß gelöst durch eine Zusammensetzung, welche ein Polymermaterial, insbesondere ein thermoplastisches oder duroplastisches Polymermaterial, und darin enthalten und/oder gebunden ein halogenfreies Flammschutzmittel in einer Menge von 1 bis 40 Gew.%, bezogen auf die gesamte Zusammensetzung, aufweist, wobei das Flammschutzmittel eine Verbindung der Formel (I), dessen korrespondierendes Ammoniumsalz, dessen korrespondierendes Phosphonatsalz oder ein Gemisch der vorgenannten ist: 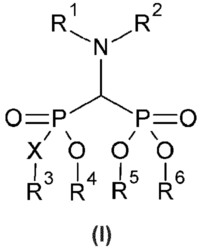 wobei
**(i) R¹** und **R²** gleiche oder verschiedene Substituenten sind und aus der Gruppe ausgewählt sind, bestehend aus linearen, verzweigten oder zyklischen Alkylen, Alkenylen und Alkinylen, unsubstituierten und alkylsubstituierten Phenylen, mononuklearen und multinuklearen Aromaten mit bis zu 4 Kernen, mononuklearen oder multinuklearen Heteroaromaten mit bis zu 4 Kernen, Silylen, Allyl-, Alkyl- oder Arylalkoholen, oder
**(ii) R¹** und **R²** gemeinsam, das N-Atom eingeschlossen, einen gesättigten oder einfach ungesättigten oder mehrfach ungesättigten Heterozyklus mit 4-8 Ringatomen, die ausgewählt sind aus Kohlenstoff, Sauerstoff, Schwefel, Phosphor, Silizium und Stickstoff, bilden, wobei an dem Heterozyklus, wenn er als Ringatome Stickstoffatome aufweist, diese Stickstoffatome mit H, einer Alkyl-, einer Aryl- oder einer Methylbisphosphonatgruppe der folgenden Struktur (II) substituiert sind, 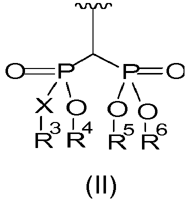 und wobei an dem Heterozyklus, wenn er als Ringatome Kohlenstoff, Phosphor oder Silizium aufweist, diese Atome Substituenten aufweisen können, ausgewählt aus der Gruppe bestehend aus H, Alkyl, Aryl, -NH₂, -NHR, -NR₂, -OH, -OR, =O, -I, -Cl, -Br, mit R= Alkyl, Aryl,
und wobei **-X-** ein Sauerstoffatom, **-O-,** ist **oder -X-** eine **Einfachbindung** ist und wobei
**(i) R³**, **R⁴**, **R⁵** und **R⁶** gleiche oder verschiedene Substituenten sind und ausgewählt sind aus der Gruppe, bestehend aus H, linearen, verzweigten oder zyklischen Alkylen, Alkenylen und Alkinylen, unsubstituierten und alkylsubstituierten Phenylen, multinuklearen Aromaten mit bis zu 4 Kernen, mononuklearen oder multinuklearen Heteroaromaten mit bis zu 4 Kernen, Silylen, Allyl-, Alkyl- oder Arylalkoholen, Kationen, wobei das Kation Na⁺, K⁺, Mg²⁺, Ca²⁺, B³⁺, Al³⁺, Zn²⁺, NH₄⁺ oder das Ammoniumion einer Aminverbindung, ausgewählt aus der Gruppe, bestehend aus Melamin oder dessen Kondensationsprodukten, vorzugsweise Melam, Melem, Melon, Harnstoff, Guanidin, Morpholin und Piperazin, ist, wobei
(ia) wenn **R¹** und **R²** gleich Methyl sind, **R³**, **R⁴**, **R⁵** und **R⁶** gleiche oder verschiedene Substituenten sind und ausgewählt sind aus der Gruppe, bestehend aus linearen, verzweigten oder zyklischen Alkylen, Alkenylen und Alkinylen, unsubstituierten und alkylsubstituierten Phenylen, multinuklearen Aromaten mit bis zu 4 Kernen, mononuklearen oder multinuklearen Heteroaromaten mit bis zu 4 Kernen, Silylen, Allyl-, Alkyl- oder Arylalkoholen, Kationen, wobei das Kation Mg²⁺, Ca²⁺, B³⁺, Al³⁺, Zn²⁺, oder das Ammoniumion einer Aminverbindung, ausgewählt aus der Gruppe, bestehend aus Melamin oder dessen Kondensationsprodukten, vorzugsweise Melam, Melem, Melon, Harnstoff, Guanidin, Morpholin und Piperazin, ist und/oder
**(ii)** wenn **-X-** ein Sauerstoffatom, **-O-**, ist, **-OR³** und **-OR⁴** gemeinsam und/oder **-OR⁵** und **-OR⁶** gemeinsam, das P-Atom der Phosphonatgruppe eingeschlossen, einen cyclischen Phosphonsäureester mit einer Ringgröße von 4-10 Atomen bilden, und/oder
(iii) wenn **-X-** eine Einfachbindung ist, **R³** und **-OR⁴** gemeinsam, das P-Atom der Phosphinatgruppe eingeschlossen, einen cyclischen Phosphinsäureester mit einer Ringgröße von 4-10 Atomen bilden und/oder **-OR⁵** und **-OR⁶** gemeinsam, das P-Atom der Phosphonatgruppe eingeschlossen, einen cyclischen Phosphonsäureester mit einer Ringgröße von 4-10 Atomen bilden

Die erfindungsgemäßen Flammschutzmittel können nach dem in der DE 31 33 308 A1 beschriebenen Verfahren hergestellt werden. Nach diesem können Alkylaminomethan-diphosphonsäuren bzw. deren Acrylderivate in sehr guten Ausbeuten erhalten werden, wenn man die Reaktionsprodukte aus Acetanhydrid oder Acetylchlorid und phosphoriger Säure mit Alkylformamiden in stöchiometrischen Verhältnissen umsetzt. Zur Erzielung einer möglichst hohen Ausbeute soll die Reaktionstemperatur der ersten Umsetzungsstufe, d.h. der Umsetzung von Acetanhydrid bzw. Acetylchlorid mit phosphoriger Säure, zwischen 40-60°C gehalten werden. Anstelle der Edukte Acetanhydrid bzw. Acetylchlorid und phosphoriger Säure lässt sich im ersten Reaktionsschritt auch eine Mischung aus Phosphortrichlorid und Essigsäure einsetzen. Als geeignete Alkylformamide werden u.a. Mono- als auch Dialkylformamide wie beispielsweise Methyl- und Dimethylformamid, Ethyl- und Diethylformamid sowie die Formylverbindungen von Morpholin, Piperidin, Pyrolidin, Oxazolidin, Alkanolaminen beschrieben.

In einer bevorzugten Ausführung bilden **R¹** und **R²** gemeinsam, das N-Atom eingeschlossen, einen Morpholin- oder Piperidinring, besonders bevorzugt Strukturen gemäß Formel (II) und (III). 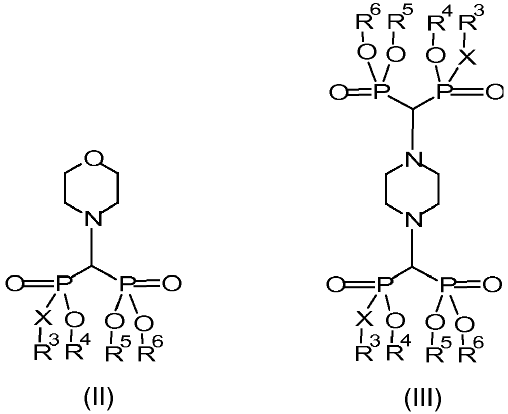 Vorzugsweise sind in diesen Strukturen X= -O- und **R³**, **R⁴**, **R⁵** und **R⁶** H, Na⁺, NH₄⁺, Zn²⁺ oder Al³⁺. In einer besonders bevorzugten Ausführungsform sind alle Reste **R³**, **R⁴**, **R⁵** und **R⁶** H. In einer weiteren bevorzugten Ausführungsform sind drei der Reste **R³**, **R⁴**, **R⁵** und **R⁶** Natrium und ein Rest H.

In einer weiteren Ausführungsform bilden **R¹** und **R²** gemeinsam, das N-Atom eingeschlossen, einen 1,3,5-Triazincyclohexanring, besonders bevorzugt eine Struktur gemäß Formel (IV).

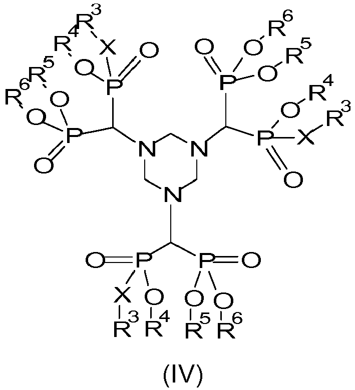

In einer weiteren bevorzugten Ausführungsform bilden **R¹** und **R²** gemeinsam, das N-Atom eingeschlossen, einen 1,3,5-Triazin-2,4,6-tricyclohexanring, besonders bevorzugt eine Struktur gemäß Formel (V).

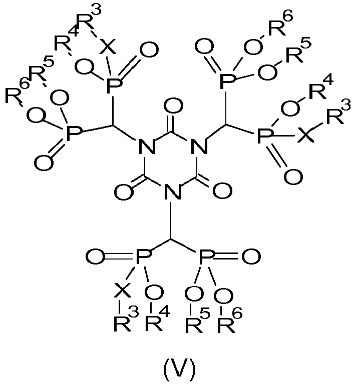

In einer weiteren bevorzugten Ausführungsform sind **R¹** und **R²** gleiche oder verschiedene Substituenten, wobei mindestens einer der Substituenten Melamin ist, wobei die Stickstoffatome der Aminogruppen mit H, einer Alkyl-, einer Aryl- oder einer Methylbisphosphonatgruppe der folgenden Struktur (II) substituiert sind.

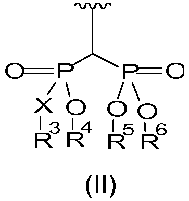

Besonders bevorzugt ist an jedem der Stickstoffatome der Aminogruppen einer der Substituenten H und der andere eine Methylbisphosphonatgruppe der Struktur (II). In einer anderen bevorzugten Ausführungsform sind ist an jedem der Stickstoffatome beide Substituenten eine Methylbisphosphonatgruppe der Struktur (II).

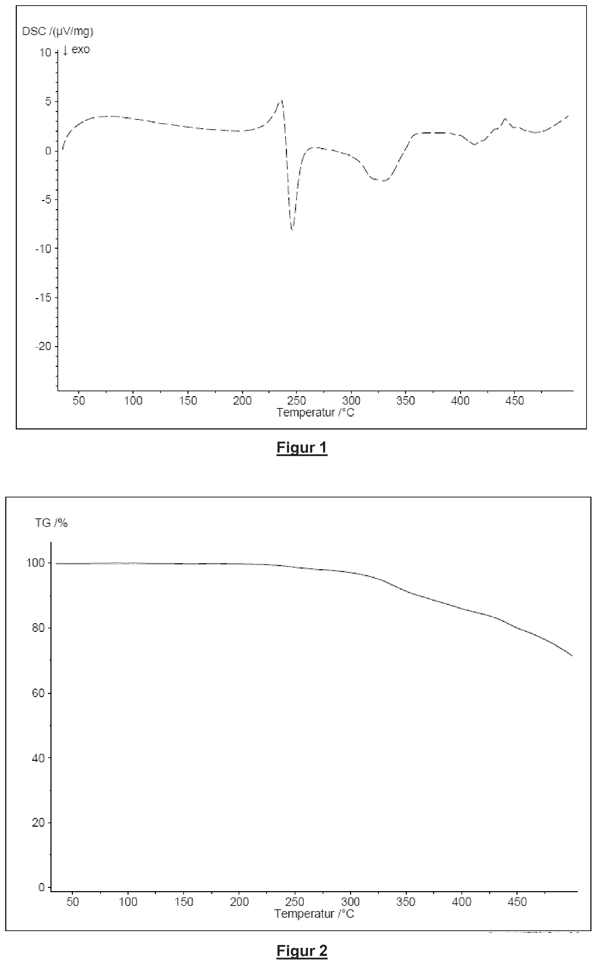

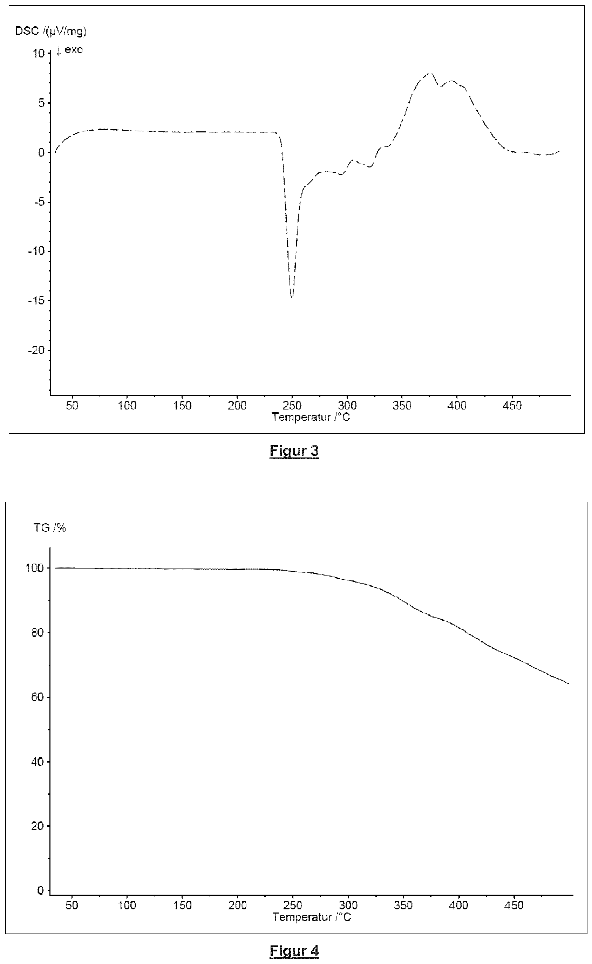

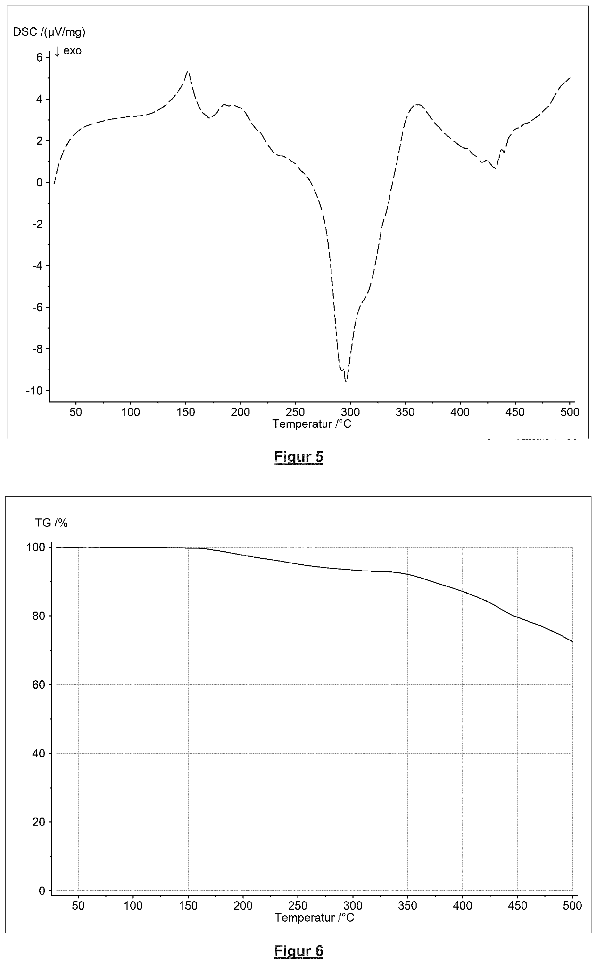

Die erfindungsgemäßen Flammschutzmittel weisen eine höhere Thermostabilität als die aus dem Stand der Technik bekannten Phosphonate auf, bei denen der Kohlenstoff in α-Stellung zum Stickstoff nur mit einer Phosphonatgruppe substituiert ist. Das bedeutet, dass die Zersetzungstemperatur höher als bei vergleichbaren bekannten Phosphonaten ist. Im erfindungsgemäßen Zusammenhang wird die Zersetzungstemperatur als die Temperatur verstanden, bei der ein Masseverlust einer trockenen Probe des Flammschutzmittels von 2 Gew-% erreicht wird. Beispielsweise erreicht Aminotrimethylenphosphonsäure (ATMP, CAS: 6419-19-8) einen Masseverlust von 2 Gew-% bereits bei 176,4°C (siehe Figur 5). Ein entsprechender Masseverlust wird bei den erfindungsgemäßen Phosphonaten erst bei deutlich höheren Temperaturen erzielt (siehe Figuren 2 und 4). Der Masseverlust der Probe in Abhängigkeit der Temperatur kann durch Thermogravimetrie bestimmt werden. "Trocken" bedeutet in diesem Fall, dass der Wassergehalt des Flammschutzmittels < 0,5 Gew-% beträgt. Der Wassergehalt des Flammschutzmittels kann durch die dem Fachmann bekannten Methoden wie beispielsweise Kolorimetrische Karl-Fischer-Titration oder NIR-Spektroskopie ermittelt werden. Das erfindungsgemäße Flammschutzmittel eignet sich insbesondere für die Einarbeitung in ein Polymermaterial, das durch Extrusion verarbeitet werden soll, da es sich bei den für die Extrusion üblichen Verarbeitungstemperaturen nicht zersetzt, sondern erst bei den bei Bränden auftretenden höheren Temperaturen und dann seine flammschützende Wirkung entfaltet.

Zusätzlich weist das erfindungsgemäße Flammschutzmittel vorteilhaft auch eine geringere Entwicklung von Rauchgasen auf. Dies äußert sich in einer höheren Restmasse nach der Zersetzung. Die Erfinder gehen davon aus, dass die erhöhte Thermostabilität der erfindungsgemäßen Flammschutzmittel auf deren besondere Struktur zurückzuführen ist. Prinzipiell erfolgt bei der thermischen Zersetzung von Aminomethanphosphonaten eine Bindungsspaltung zuerst an der schwachen P-C-Bindung der P-CH₂N-Gruppe. Zwar ist die P-C-Bindung grundsätzlich chemisch und thermisch stabil, allerdings stabilisiert die α-Aminogruppe das durch die Homolyse entstehende Kohlenstoffradikal, sodass die P-C-Bindungsspaltung bei Aminomethanphosphonaten bereits bei geringerer Temperatur abläuft. Da bei den Verbindungen aus dem Stand der Technik die α-Aminogruppe ein relativ niedriges Molekulargewicht aufweist, kann das korrespondierende Amin nach der Homolyse als gasförmiges Produkt entweichen. Das Entweichen des Amins stellt eine thermodynamische Triebkraft der Reaktion dar, sodass diese bevorzugt abläuft. Bei den Flammschutzmitteln der vorliegenden Erfindung ist an das Kohlenstoffradikal in α-Stellung zur Amingruppe eine weitere Phosphonatgruppe gebunden. Dadurch weist das Amin ein höheres Molekulargewicht auf, wodurch es grundsätzlich nur zu einem weitaus geringeren Anteil entweicht. Damit das Amin bei niedrigeren Temperaturen entweichen kann, müsste dies eine geringere Masse aufweisen, was nur dadurch erreicht werden kann, dass auch die P-C-Bindung zur zweiten Phosphonatgruppe homolytisch gespalten wird. Da hierdurch allerdings ein besonders instabiles Carbanion entstehen würde, läuft diese Reaktion nicht oder nahezu gar nicht ab. Entsprechend ist bei der Zersetzung in einem Polymermaterial eine deutlich geringere Aminfreisetzung und damit auch eine geringere Rauchgasentwicklung zu beobachten. Weiterhin wird dadurch, dass das Amin nach der Bindungsspaltung nicht sofort entweicht, auch die Rückreaktion, also die Kombination der beiden Radikale zur Ausgangsverbindung, ermöglicht. Die oben genannten Effekte tragen dazu bei, dass die Spaltung der P-C-Bindung nicht so vorteilhaft ist, wie bei den Verbindungen aus dem Stand der Technik, sodass die erfindungsgemäßen Aminomethanphosphonate eine deutlich erhöhte Thermostabilität aufweisen.

In einer bevorzugten Ausführungsform der Erfindung wird die Zersetzungstemperatur, d.h. ein Masseverlust des trockenen Flammschutzmittels von 2 Gew-%, erst ab einer Temperatur von 200°C, besonders bevorzugt 220°C, am bevorzugtesten ab einer Temperatur von 245°C erreicht.

Da das Kohlenstoffatom in α-Stellung zur Aminogruppe zweifach mit einer Phosphonatgruppe substituiert ist, weisen die erfindungsgemäßen Flammschutzmittel einen höheren Phosphorgehalt als die bekannten Phosphonate aus dem Stand der Technik auf. Es wurde festgestellt, dass die flammhemmende Wirkung der phosphorhaltigen Flammschutzmittel mit steigendem Phosphorgehalt zunimmt. Daher ist die Effektivität, d.h. die flammhemmende Wirkung pro Masseeinheit eingesetztem Flammschutzmittel, der erfindungsgemäßen Flammschutzmittel besonders hoch. Selbst bei geringen Konzentrationen an Flammschutzmittel im Polymermaterial kann daher eine gute flammhemmende Wirkung erzielt werden. Gleichzeitig werden die Eigenschaften des Polymermaterials, insbesondere die Verarbeitbarkeit und Bruchdehnung, kaum beeinflusst. In einer bevorzugten Ausführungsform beträgt der Phosphorgehalt des Flammschutzmittels wenigstens 19,5 Gew-%, bevorzugt wenigstens 20 Gew-%, besonders bevorzugt wenigstens 21,5 Gew-%, am bevorzugtesten wenigstens 23,5 Gew-%. Damit der Phosphorgehalt des erfindungsgemäßen Flammschutzmittels hoch ist, weisen die Reste R¹-R⁶ vorteilhaft eine möglichst geringe Masse auf.

Insbesondere beim Zusatz als Additiv einer oder mehrerer Komponenten einer vorzugsweise katalysierten Polymerisationsreaktion kann es vorteilhaft sein, das erfindungsgemäße Flammschutzmittel als Salz oder Ester, besonders bevorzugt als Salz einzusetzen. Hierdurch wird eine mögliche Wechselwirkung freier Säuregruppen des Flammschutzmittels mit den Komponenten, z.B. mit dem Katalysator der Reaktion vermieden. Auch bei pH sensiblen Polymermaterialien, d.h. Polymermaterialien, die sich unter Einwirkung von Säuren in ihrer Struktur verändern und/oder zersetzt werden, ist das erfindungsgemäße Flammschutzmittel vorteilhaft als Salz oder Ester einzusetzen. Weiterhin kann für derartige Anwendungen die Salzform in Wasser gelöst und auf eine Weise mit dem Polyol homogen vermischt werden. Wenn das Flammschutzmittel als Ester eingesetzt wird, kann dies durch die Hydrophobierung zusätzlich zu einer besseren Anbindung an die Matrix beitragen, was wiederum zu einer besseren Mechanik und geringeren Migration aus dem Polymer führt.

In einer bevorzugten Ausführungsform der Erfindung sind daher mindestens eine, bevorzugt mindestens zwei, besonders bevorzugt mindestens drei, am bevorzugtesten vier der Gruppen **R³**, **R⁴**, **R⁵** und **R⁶** ein Kation, wobei das Kation Na⁺, K⁺, Mg²⁺, Ca²⁺, B³⁺, Al³⁺, Zn²⁺ , NH₄⁺ oder das Ammoniumion einer Aminverbindung, ausgewählt aus der Gruppe, bestehend aus Melamin oder dessen Kondensationsprodukten, vorzugsweise Melam, Melem, Melon, Harnstoff, Guanidin, Morpholin und Piperazin, ist. Besonders bevorzugt sind Na⁺ und Ca²⁺. Am bevorzugtesten ist der Einsatz von Na⁺ als Kation, da dieses eine geringe Molmasse aufweist und dadurch der Gewichtsanteil von Phosphor am Flammschutzmittel möglichst hoch gehalten werden kann.

Insbesondere wenn das zu schützende Polymer kein unpolares Polyolefin sondern ein polares Polymer wie ein Polyamid, ein Polyurethan, ein Polyharnstoff oder ein Polyester ist, kann es vorteilhaft sein, das erfindungsgemäße Flammschutzmittel als Säure einzusetzen. Speziell beim Einsatz als Co-Kondensations-/Additionskomponente ist das Flammschutzmittel vorzugsweise eine Säure. In einer bevorzugten Ausführungsform der Erfindung sind daher mindestens eine, bevorzugt mindestens zwei, besonders bevorzugt mindestens drei, am bevorzugtesten vier der Gruppen **R³**, **R⁴**, **R⁵** und **R⁶** H. Beispielsweise kann das erfindungsgemäße Flammschutzmittel vorzugsweise in der Form der Säure einem Polyurethanschäumungsprozess als Co-Additionskomponente zugesetzt werden. Ohne an diese Theorie gebunden zu sein, gehen die Erfinder davon aus, dass durch die Reaktion von Isocyanat und Phosphonsäuregruppe das Flammschutzmittel unter Ausbildung einer besonders stabilen P-O-C(=O)-N Gruppe in das Polymer eingebaut wird, was sich positiv auf das Zersetzungsverhalten des Polyurethans auswirkt. Ähnliches gilt für andere Polymere, die durch Polyaddition hergestellt werden, beispielsweise Polyethylenoxide, Polypropylenoxide, Polyethylenglycole und Polyharnstoffe. Auch hier reagiert die Phosphonsäuregruppe mit einer der Komponenten und wird hierdurch in das Polymer eingebaut. Besonders bevorzugt ist daher der Einsatz der erfindungsgemäßen Flammschutzmittel in Form der Säure als Co-Additionskomponente in der Herstellung dieser Polymere.

In Analogie wird in einer bevorzugten Ausführungsform das erfindungsgemäße Flammschutzmittel in Form der Säure als Co-Kondensationskomponente in einer Polykondensationsreaktion eingesetzt. Die Erfinder gehen hier davon aus, dass die Phosphonsäuregruppen mit den Hydroxyl- oder Amingruppen der Komponenten der Kondensationsreaktion reagieren und hierdurch in das Polymer eingebaut werden. Die erfindungsgemäßen Flammschutzmittel werden daher bevorzugt in der Form der Säure als Co-Kondensationskomponente in der Herstellung von Polyestern, Polycarbonaten und Polyamiden eingesetzt.

In einer bevorzugten Ausführungsform der Erfindung sind die Reste **R³** und/oder **R⁴** und/oder **R⁵** und/oder **R⁶** organische Reste mit mehr als zwei Kohlenstoffatomen. Aus dem Stand der Technik sind Phosphonsäureester mit kurzkettigen Kohlenstoffresten, insbesondere Methyl, bekannt. Da diese unter Zersetzungsbedingungen eine alkylierende Wirkung haben, können sie jedoch hochtoxisch sein. Beispielsweise kann die menschliche DNA nachhaltig geschädigt werden. Mit steigender Kettenlänge nimmt die Alkylierungswirkung jedoch stark ab.

Polymermaterialien, in die das Flammschutzmittel eingebracht werden kann, sind vorzugsweise ausgewählt aus der Gruppe bestehend aus Polyvinylbutyral (PVB), Polypropylen (PP), Polyethylen (PE), Polyamid (PA), Polyester wie Polybutylenterephthalat (PBT), Polyethylenterephthalat (PET), Polyurethan (PU), Thermoplastischen Polyurethanen (TPU) Polyharnstoff, Polyphenylenoxid, Polyacetal, Polyacrylat, Polymethacrylat, Polyoxymethylen, Polyvinylacetal, Polystyrol, Acrylnitril-Butadien-Styrol (ABS), Acrylnitril-Styrol-Acrylester (ASA), Polycarbonat, Polyethersulfon, Polysulfonat, Polytetrafluoroethylen, Polyharnstoff, Formaldehydharze, Melaminharze, Polyetherketon, Polyvinylchlorid, Polylactid, Polysiloxan, Phenolharze, Epoxidharze, Poly(imid), Bismaleimid-Triazin, thermoplastischem Polyurethan, Ethylen-Vinylacetat-Copolymer (EVA), Polylactid (PLA), Polyhydrobuttersäure (PHB), Copolymeren und/oder Mischungen der vorgenannten Polymere. Besonders bevorzugt ist der Einsatz des erfindungsgemäßen Flammschutzmittels in Schäumen der vorgenannten Polymermaterialien, besonders bevorzugt in Polyurethanschäumen. Hierbei wird das Flammschutzmittel vorzugsweise als Additiv oder Co-Kondensations-/Additionskomponente der Polyolkomponente beigefügt. Wenn das Flammschutzmittel als Additiv beigefügt wird, so ist dieses vorzugsweise ein Salz oder ein Ester. Wenn das Flammschutzmittel als Co-Kondensations-/Additionskomponente beigefügt wird, so ist dieses vorzugsweise eine Säure.

Besonders bevorzugt bilden bei den hierfür eingesetzten Flammschutzmitteln **R¹** und **R²** gemeinsam, das N-Atom eingeschlossen, einen Morpholinring, sodass ein Flammschutzmittel mit Struktur der Formel (II) erhalten wird.

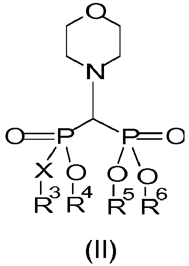

Es wurde beobachtet, dass diese Phosphonate nicht nur einen flammhemmenden Effekt aufweisen, sondern dass sie auch die Polyurethanschäumung katalysieren können.

In einer bevorzugten Ausführungsform enthält das Polymermaterial das Flammschutzmittel in einer Menge von wenigstens 1,5 Gew.-% oder wenigstens 5 Gew.-% oder wenigstens 10 Gew.-% oder wenigstens 15 Gew.-% und/oder in einer Menge von höchstens 35 Gew.-% oder höchstens 30 Gew.-% oder höchstens 25 Gew.-%, bezogen auf die gesamte Polymerzusammensetzung.

Bei diesen Mengenverhältnissen wird einerseits eine gute Flammschutzwirkung der Polymerzusammensetzung gewährleistet und andererseits werden die Verarbeitungs- und Materialeigenschaften des Polymermaterials nur wenig beeinflusst.

Das erfindungsgemäße Flammschutzmittel kann mit Vorteil in Kombination mit anderen Flammschutzmitteln, z.B. mit solchen, die den Flammschutz durch einen anderen Mechanismus bewirken, eingesetzt werden. Durch die Wechselwirkung des erfindungsgemäßen Flammschutzmittels mit anderen Flammschutzmitteln kann ein synergistischer Effekt, d.h. ein Effekt, der über die bloße Summe der flammhemmenden Wirkung der einzelnen Komponenten hinausgeht, erzielt werden.

In einer bevorzugten Ausführungsform enthält das Polymermaterial wenigstens eine weitere flammschützende Komponente, die vorzugsweise ausgewählt ist unter Stickstoffbasen, Melaminderivaten, Phosphaten, Pyrophosphaten, Polyphosphaten, organischen und anorganischen Phosphinaten, organischen und anorganischen Phosphonaten und Derivaten der vorgenannten Verbindungen, vorzugsweise ausgewählt unter Ammoniumpolyphosphat, mit Melamin, Melaminharz, Melaminderivaten, Silanen, Siloxanen, Polysiloxanen, Silikonen oder Polystyrolen beschichteten und/oder beschichteten und vernetzten Ammoniumpolyphosphatpartikeln, sowie 1,3,5-Triazinverbindungen, einschließlich Melamin, Melam, Melem, Melon, Ammelin, Ammelid, 2-Ureidomelamin, Acetoguanamin, Benzoguanamin, Diaminphenyltriazin, Melaminsalze und -addukte, Melamincyanurat, Melaminborat, Melaminorthophosphat, Melaminpyrophosphat, Dimelaminpyrophosphat, Aluminiumdiethylphosphinat, Melaminpolyphosphat, oligomere und polymere 1,3,5-Triazinverbindungen und Polyphosphate von 1,3,5-Triazinverbindungen, Guanin, Piperazinphosphat, Piperazinpolyphosphat, Ethylendiaminphosphat, Pentaerythritol, Dipentaerythritol, Borphosphat, 1,3,5-Trihydroxyethylisocyanurat, 1,3,5-Triglycidylisocyanurat, Triallylisocyanurat und Derivaten der vorgenannten Verbindungen. In einer bevorzugten Ausführungsform enthält das Polymermaterial für eine bessere Dispergierbarkeit der weiteren Flammschutzkomponente Wachse, Silikone, Siloxane, Fette oder Mineralöle.

Vorzugsweise enthält das Polymermaterial neben dem erfindungsgemäßen Flammschutzmittel als weitere Flammschutzkomponente ein Phosphat, insbesondere Ammoniumpolyphosphat. Da die Festphasenaktivität von Phosphaten in der Regel die der Phosphonate übersteigt, Phosphonate hingegen eine höhere Gasphasenaktivität aufweisen, kann durch die Kombination eine besonders ausgeprägte flammhemmende Wirkung erzielt werden.

In einer bevorzugten Ausführungsform beträgt das Verhältnis von erfindungsgemäßen Flammschutzmittel zu der wenigstens einen weiteren Flammschutzkomponente im Polymermaterial 1:18 bis 1:1, vorzugsweise 1:9 bis 1:4 und besonders bevorzugt 1:6 bis 1:4. Diese Verhältnisse treffen auch für die Verwendung von Ammoniumpolyphosphat als weitere Flammschutzkomponente zu.

Weiterhin bevorzugt enthält das Polymermaterial neben dem erfindungsgemäßen Flammschutzmittel weitere Füllstoffe, die unter Calciumcarbonat, Silicaten, wie Talk, Ton oder Glimmer, Kaolin oder Wolastonit, Kieselerde, Calcium- und Bariumsulfat, Aluminiumhydroxid, Glasfasen und Glaskugeln sowie Holzmehl, Cellulosepulver und Rußen und Graphiten ausgewählt sind. Diese Füllstoffe können weitere gewünschte Eigenschaften des Polymermaterials bewirken. Insbesondere kann dadurch der Preis des Polymermaterials herabgesetzt werden, das Polymermaterial gefärbt werden oder dessen mechanische Eigenschaften verbessert werden, z.B. durch eine Verstärkung mit Glasfasern.

In einer weiteren Ausführungsform der Erfindung weist das Polymermaterial insgesamt einen Halogengehalt von < 1500 Gew.-ppm, vorzugsweise < 900 Gew.-ppm auf. Der Halogengehalt kann durch die dem Fachmann gängigen Analysenmethoden wie Combustion lonenchromatographie (CIC) ermittelt werden. Der besonders niedrige Halogengehalt ist vorteilhaft gegenüber den Flammschutzmitteln aus dem Stand der Technik, da bei den bekannten Flammschutzmitteln unerwünscht viel Halogen in Form von anorganisch und organisch gebundenen Halogenen eingebracht wurde. Der Begriff "halogenfrei" im Sinne der Erfindung erlaubt geringe Verunreinigungen an Halogen in den vorgenannten Höchstmengen. Halogen soll allerdings generell gering gehalten werden, um die nachteiligen Auswirkungen der Halogene zu vermeiden.

Wird das Flammschutzmittel in einem Umformungsprozess in das zu schützende Polymermaterial eingearbeitet, so wird bei der Einarbeitung des Flammschutzmittels vorteilhaft ein Dispergierhilfsmittel verwendet. In einer weiteren Ausführungsform der Erfindung ist in dem erfindungsgemäßen Polymermaterial deshalb ein Dispergierhilfsmittel in einer Menge von 0,01 bis 10 Gew.-%, vorzugsweise in einer Menge von 0,1 bis 5,0 Gew.-% bezogen auf das Gewicht des erfindungsgemäßen Flammschutzmittels enthalten, wobei das Dispergierhilfsmittel vorzugsweise unter Fettsäureamiden, einschließlich Fettsäuremonoamiden, Fettsäurebisamiden und Fettsäurealkanolamiden, wie Oleamiden und Erucamiden, unter Fettsäureestern, einschließlich Glycerolestern und Waxestern, unter C16- bis C18-Fettsäuren, unter Fettsäurealkoholen, einschließlich Cetyl- und Stearyl-Fettsäurealkoholen, unter natürlichen und synthetischen Wachsen, Polyethylenwachsen und oxidierten Polyethylenwachsen und unter Metallstearaten, vorzugsweise Ca-, Zn-, Mg-, Ba-, AI-, Cd- und Pb-Stearaten, ausgewählt ist. Die Zugabe der vorgenannten Dispergierhilfsmittel verbessert die Dosierbarkeit des Flammschutzmittels, die Extrudierbarkeit des Polymermaterials und die Homogenität des dispergierten Flammschutzmittels innerhalb des Polymermaterials.

In einer weiteren Ausführungsform der Erfindung weist das erfindungsgemäße Flammschutzmittel einen Gehalt an freiem Wasser (Feuchtegehalt) von < 0,6 Gew.-%, vorzugsweise < 0,4 Gew.-% auf. Ein niedriger Wassergehalt verbessert ebenfalls die Dosierbarkeit des Flammschutzmittels, die Extrudierbarkeit des Polymermaterials und die Homogenität des dispergierten Flammschutzmittels innerhalb der Zusammensetzung und verhindert hydrolysebedingte Zersetzung.

Das Flammschutzmittel kann durch verschiedene Verfahren in das Polymermaterial eingebracht werden. Zunächst einmal kann das Flammschutzmittel während des Formungsprozesses in das Polymermaterial eingearbeitet werden. Wird das Polymermaterial beispielsweise durch Extrusion verarbeitet, kann das Flammschutzmittel im Extrusionsprozess, z.B. mittels eines Masterbatches zugeführt werden. Ein Masterbatch in Sinne der vorliegenden Erfindung ist ein Polymermaterial in der Form von Granulat oder Pulver, welches das Flammschutzmittel und die ggf. weiteren Zusatzstoffe in Konzentrationen enthält, die höher sind als in der Endanwendung. Der Masterbatch oder verschiedene Masterbatches werden zur Herstellung des erfindungsgemäßen Polymermaterials mit weiterem Polymermaterial ohne das im Masterbatch enthaltene Flammschutzmittel in solchen Mengen bzw. Verhältnissen vereinigt, welche den gewünschten Konzentrationen des Flammschutzmittels im Endprodukt entsprechen. Masterbatches haben gegenüber dem Zusatz von verschiedenen Stoffen in Form von Pasten, Pulvern oder Flüssigkeiten den Vorteil, dass sie eine hohe Prozesssicherheit gewährleisten und sehr gut zu verarbeiten und zu dosieren sind. Durch die Extrusion wird das Flammschutzmittel gleichmäßig im Polymermaterial verteilt.

In einer anderen Ausführungsform ist das Flammschutzmittel eine Co-Kondensationskomponente oder eine Co-Additionskomponente des Polymermaterials, die bei der Herstellung des Polymermaterials durch Polykondensation oder Polyaddition verwendet wird. Das Flammschutzmittel kann so an das Polymermaterial gebunden werden. Der Einbau des Flammschutzmittels in das Polymer kann mittels geeigneter Analysentechniken, insbesondere ³¹P-NMR-Spektroskopie, nachgewiesen werden. In einer besonders bevorzugten Ausführungsform ist das Polymermaterial ein Polyester oder ein Polyurethan. Eine entsprechende Vorgehensweise hat den Vorteil, dass das Flammschutzmittel an das Polymermaterial fest gebunden ist und somit kaum oder gar nicht aus dem Polymermaterial entweichen kann, d.h. das "Leaching" ist entsprechend gering.

Die Erfindung umfasst auch ein Flammschutzmittel, welches eine Verbindung der Formel I, dessen korrespondierendes Ammoniumsalz, dessen korrespondierendes Phosphonatsalz oder ein Gemisch der vorgenannten ist, dadurch gekennzeichnet, dass wenigstens eine der Gruppen **R³**, **R⁴**, **R⁵** und **R⁶** gleich H oder ein Kation ist, wobei das Kation Na⁺, K⁺, Mg²⁺, Ca²⁺, B³⁺, Al³⁺, Zn²⁺, NH₄⁺ oder das Ammoniumion einer Aminverbindung, ausgewählt aus der Gruppe, bestehend aus Melamin oder dessen Kondensationsprodukten, vorzugsweise Melam, Melem, Melon, Harnstoff, Guanidin, Morpholin und Piperazin, ist.

Die Erfindung umfasst auch die Verwendung einer Verbindung gemäß Formel I, dessen korrespondierenden Ammoniumsalzes, dessen korrespondierenden Phosphonatsalzes oder eines Gemisches der vorgenannten, als Flammschutzmittel zur Flammschutzausrüstung von Polymermaterial, insbesondere von thermoplastischem Polymer.

### BEISPIELE

Die Erfindung wird nun anhand von konkreten Ausführungsformen von erfindungsgemäßen Flammschutzmitteln, Herstellungsbeispielen für erfindungsgemäße Zusammensetzungen sowie anhand von Flammschutzbeispielen und der angefügten Figuren weiter erläutert.

### Konkrete Ausführungsformen von erfindungsgemäßen Flammschutzmitteln

**Ausführungsformen mit Dimethylgruppe**

| # | 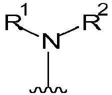 | **X** | **R³** | **R⁴** | **R⁵** | **R⁶** |
|---|---|---|---|---|---|---|
| 1 | 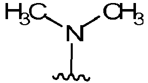 | -O- | H | H | H | H |
| 2 | 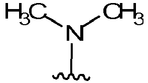 | -O- | Ethyl | Ethyl | Ethyl | Ethyl |
| 3 | 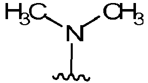 | -O- | Butyl | Butyl | Butyl | Butyl |
| 4 | 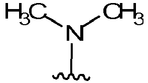 | -O- | H | Na | Na | Na |

**Ausführungsformen mit Diethylgruppe**

| # | 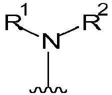 | **X** | **R³** | **R⁴** | **R⁵** | **R⁶** |
|---|---|---|---|---|---|---|
| **5** | 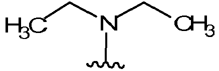 | -O- | H | H | H | H |
| **6** | 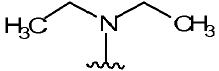 | -O- | Ethyl | Ethyl | Ethyl | Ethyl |
| **7** | 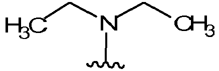 | -O- | Butyl | Butyl | Butyl | Butyl |
| **8** | 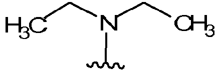 | -O- | H | Na | Na | Na |

**Ausführungsformen mit Morpholin, MOMP**

| # | 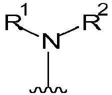 | **X** | **R³** | **R⁴** | **R⁵** | **R⁶** |
|---|---|---|---|---|---|---|
| **9** | 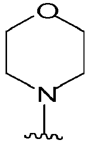 | -O- | H | H | H | H |
| **10** | 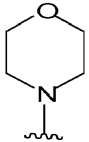 | -O- | Ethyl | Ethyl | Ethyl | Ethyl |
| **11** | 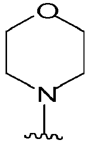 | -O- | Butyl | Butyl | Butyl | Butyl |
| **12** | 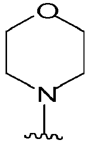 | -O- | H | Na | Na | Na |

**Ausführungsformen mit Piperazin, PIMP**

| # | 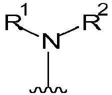 | **X** | **R³** | **R⁴** | **R⁵** | **R⁶** |
|---|---|---|---|---|---|---|
| **13** | 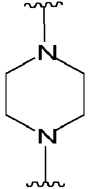 | -O- | H | H | H | H |
| **14** | 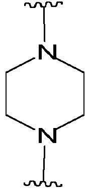 | -O- | Ethyl | Ethyl | Ethyl | Ethyl |
| **15** | 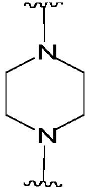 | -O- | Butyl | Butyl | Butyl | Butyl |
| **16** | 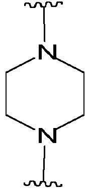 | -O- | H | Na | Na | Na |

**Ausführungsformen mit 1,3,5-Triazincyclohexanring**

| # | 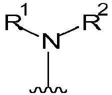 | **X** | **R³** | **R⁴** | **R⁵** | **R⁶** |
|---|---|---|---|---|---|---|
| **17** | 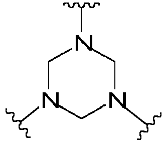 | -O- | H | H | H | H |
| **18** | 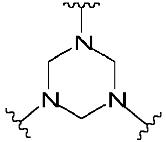 | -O- | Ethyl | Ethyl | Ethyl | Ethyl |
| **19** | 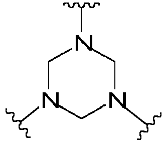 | -O- | Butyl | Butyl | Butyl | Butyl |
| **20** | 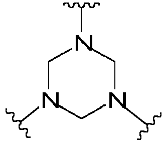 | -O- | H | Na | Na | Na |

**Ausführungsformen mit cyclischem Phosphonsäureester**

| # | **R¹** | **R²** | **X** | 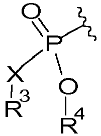 | **R⁵** | **R⁶** |
|---|---|---|---|---|---|---|
| **21** | Ethyl | Ethyl | Einfachbindung | 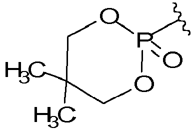 | H | H |
| **22** | Ethyl | Ethyl | Einfachbindung | 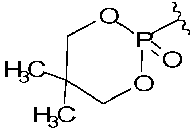 | Na | Na |
| **23** | Ethyl | Ethyl | Einfach- bindung | 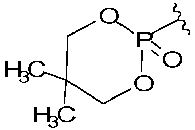 | Ethyl | Ethyl |
| **24** | Ethyl | Ethyl | Einfach- bindung | 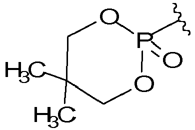 | Butyl | Butyl |

**Ausführungsformen mit cyclischem Phosphinsäureester**

| # | **R¹** | **R²** | **X** | 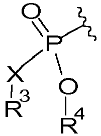 | **R⁵** | **R⁶** |
|---|---|---|---|---|---|---|
| **25** | Ethyl | Ethyl | Einfachbindung | 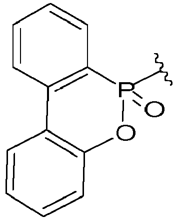 | H | H |
| **26** | Ethyl | Ethyl | Einfachbindung | 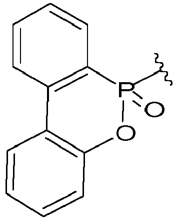 | Na | Na |
| **27** | Ethyl | Ethyl | Einfach- bindung | 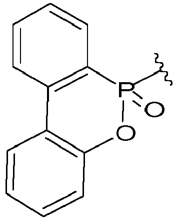 | Ethyl | Ethyl |
| **28** | Ethyl | Ethyl | Einfach- bindung | 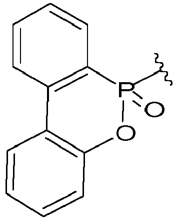 | Butyl | Butyl |

**Ausführungsformen mit Morpholin und cyclischem Phosphonsäureester**

| # | 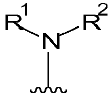 | **X** | 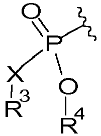 | **R⁵** | **R⁶** |
|---|---|---|---|---|---|
| **29** | 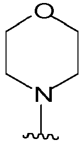 | Einfachbindung | 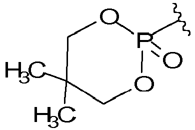 | H | H |
| **30** | 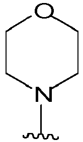 | Einfachbindung | 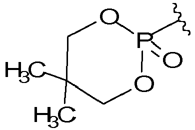 | Na | Na |
| **31** | 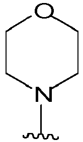 | Einfachbindung | 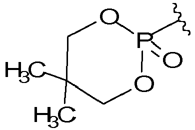 | Ethyl | Ethyl |
| **32** | 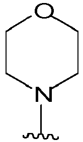 | Einfachbindung | 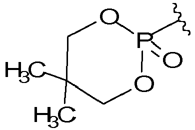 | Butyl | Butyl |
| **33** | 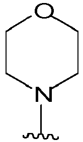 | Einfachbindung | 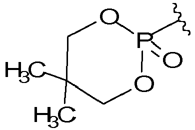 | R³ | R⁴ |

**Ausführungsformen mit Morpholin und cyclischem Phosphinsäureester**

| # | 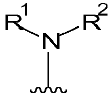 | X | 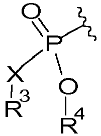 | **R⁵** | **R⁶** |
|---|---|---|---|---|---|
| **34** | 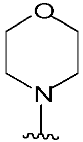 | Einfachbindung | 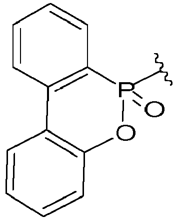 | H | H |
| **35** | 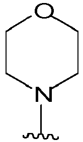 | Einfachbindung | 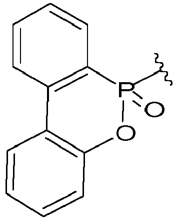 | Na | Na |
| **36** | 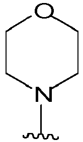 | Einfachbindung | 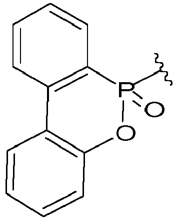 | Ethyl | Ethyl |
| **37** | 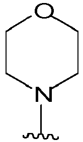 | Einfachbindung | 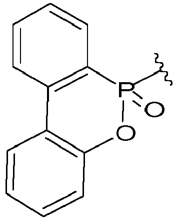 | Butyl | Butyl |
| **38** | 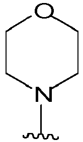 | Einfachbindung | 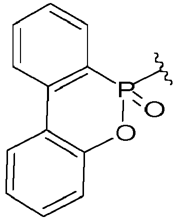 | R³ | R⁴ |

**Ausführungsformen mit Melamin und cyclischem Phosphonsäureester**

| # | **R¹** | **R²** | **X** | 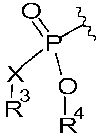 | **R⁵** | **R⁶** |
|---|---|---|---|---|---|---|
| **39** | 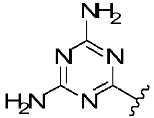 | H | Einfachbindung | 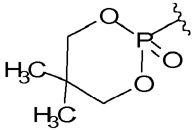 | H | H |
| **40** | 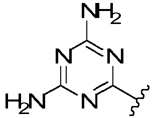 | H | Einfachbindung | 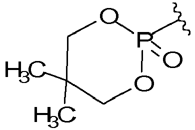 | Na | Na |
| **41** | 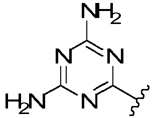 | H | Einfachbindung | 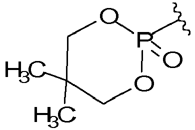 | Ethyl | Ethyl |
| **42** | 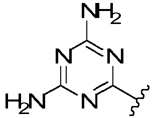 | H | Einfachbindung | 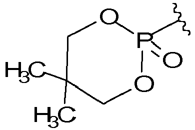 | Butyl | Butyl |

**Ausführungsformen mit Melamin und cyclischem Phosphonsäureester**

| # | **R¹** | **R²** | **X** | 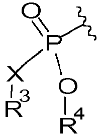 | **R⁵** | **R⁶** |
|---|---|---|---|---|---|---|
| **43** | 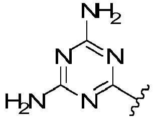 | H | Einfachbindung | 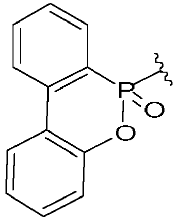 | H | H |
| **44** | 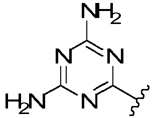 | H | Einfachbindung | 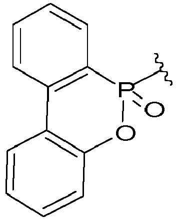 | Na | Na |
| **45** | 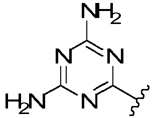 | H | Einfachbindung | 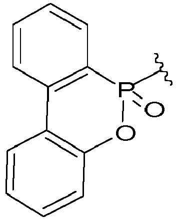 | Ethyl | Ethyl |
| **46** | 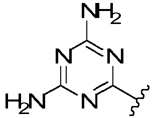 | H | Einfachbindung | 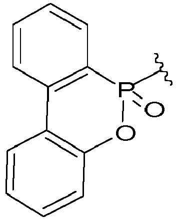 | Butyl | Butyl |

**Ausführungsformen mit Melamin und cyclischem Phosphonsäureester**

| # | **R¹** | **R²** | **X** | 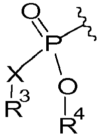 | **R⁵** | **R⁶** |
|---|---|---|---|---|---|---|
| **47** | 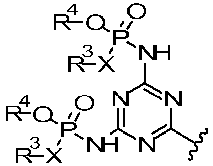 | H | Einfach- bindung | 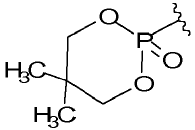 | H | H |
| **48** | 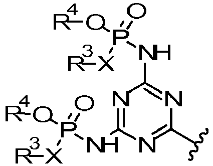 | H | Einfach- bin- dung | 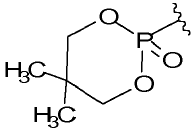 | Na | Na |
| **49** | 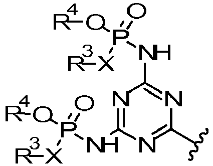 | H | Einfach- bindung | 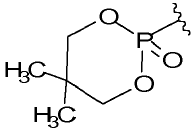 | Ethyl | Ethyl |
| **50** | 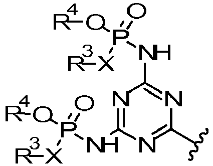 | H | Einfachbin- dung | 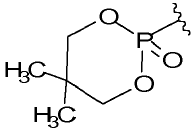 | Butyl | Butyl |

**Ausführungsformen mit Melamin und cyclischem Phosphonsäureester**

| # | **R¹** | **R²** | **X** | 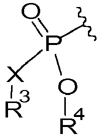 | **R⁵** | **R⁶** |
|---|---|---|---|---|---|---|
| **51** | 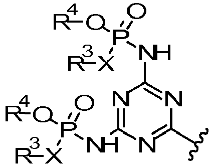 | H | Einfach- bindung | 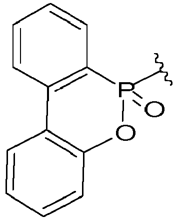 | H | H |
| **52** | 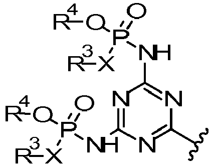 | H | Einfachbin- dung | 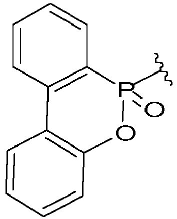 | Na | Na |
| **53** | 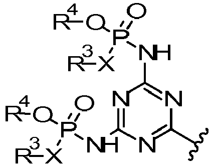 | H | Einfach- bindung | 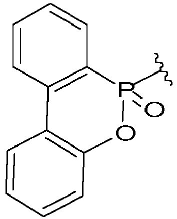 | Ethyl | Ethyl |
| **54** | 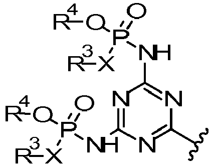 | H | Einfachbin- dung | 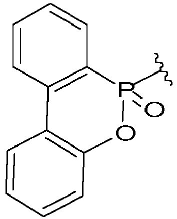 | Butyl | Butyl |

### Herstellungsbeispiele für erfindungsgemäße Zusammensetzungen

**Ausgangsstoffe:**

| **Name** | **Hersteller** | **Reinheit/Mₙ** | **CAS** |
|---|---|---|---|
| 4-Formylmorpholin | Alfa Aesar | 99% | 4394-85-8 |
| *N*,*N*-Dimethylformamid | Merck KGaA | ≥ 99% | 68-12-2 |
| Phosphonsäure | Alfa Aesar | 99+% | 4394-85-8 |
| Essigsäureanhydrid | Merck KGaA | ≥ 98% | 108-24-7 |
| Methylendiphenylisocyanat (MDI) | Sigma Aldrich | Mₙ∼340 | 9016-87-9 |
| Polyol | Sigma Aldrich | Mₙ∼4000 | 9082-00-2 |
| Pentan | Sigma Aldrich | wasserfrei, ≥ 99 | 109-66-0 |
| Ethylenglykol | Sigma Aldrich | wasserfrei, 99,8 | 107-21-1 |

**Weitere Flammschutzmittel:**

| | |
|---|---|
| Budit 240: | phosphorhaltiges, partiell vernetztes Polyacrylat, hergestellt gemäß Beispiel 1 der WO 2014/124933 |
| Budit 315: | Melamincyanurat der Chemischen Fabrik Budenheim KG |
| Budit 342: | Melaminpolyphosphat der Chemischen Fabrik Budenheim KG |
| Budit 667: | intumeszierendes Flammschutzsystem der Chemischen Fabrik Budenheim KG auf Basis von Ammoniumpolyphosphat |
| TCPP: | Tris(2-chlorisopropyl)phosphat TCPP der Firma Sigma Aldrich (CAS: 13674-84-5) |
| OP 550: | Phosphorhaltiges Polyol Exolit OP 550 der Firma Clariant AG (CAS: 184538-58-7) |

### Messmethoden:

Dynamische Differenzkalorimetrie (DSC)-Messungen wurden mit einem Gerät für simultane Thermogravimetrie - Dynamische Differenzkalorimetrie (STA/TG-DSC), Modell STA409 PC/3/H Luxx, Firma Netzsch Gerätebau GmbH, im Bereich von 25 bis 500°C unter Stickstoffatmosphäre mit einer Heizrate von 10K/min durchgeführt. Die Einwaage der Proben betrug circa 15 mg. Zur Auswertung wurde die Software NETZSCH Proteus genutzt.
Thermogravimetrische Analysen (TGA) wurden mit einem Gerät für simultane Thermogravimetrie - Dynamische Differenzkalorimetrie (STA/TG-DSC), Modell STA409 PC/3/H Luxx, Firma Netzsch Gerätebau GmbH, im Bereich von 25 bis 800°C unter Stickstoffatmosphäre mit einer Heizrate von 10K/min durchgeführt. Die Einwaage der Proben betrug 12-15 mg. Zur Auswertung der TGA Kurven wurden die Software NETZSCH Proteus genutzt.

### Beispiel 1: Synthese von Morpholin-methylaminodiphosphonsäure (MOMP-H₄)

0,1 mol 4-Formylmorpholin wurden in einem 500 ml Rundkolben vorgelegt und mit 0,2 mol Phosphonsäure und 30 ml Essigsäureanhydrid vermischt. Die Reaktionslösung wurde bei 65°C für 90 Minuten gerührt. Im Anschluss wurden unter reduziertem Druck von -30 mbar die entstandene Essigsäure sowie überschüssiges Wasser am Rotationsverdampfer entfernt und der Rückstand bei 85°C 4 h im Trockenschrank von restlichem Lösemittel befreit.

### Beispiel 2: Synthese von Piperazin-di(methylaminodiphosphonsäure) (PIMP-H₄)

0,28 mol Phosphonsäure wurden unter Rühren in einem 250 ml Rundkolben in 31 ml vollentsalztem Wasser gelöst. Hierzu wurde über eine Spanne von 15 min eine Lösung von 0,07 mol Diformylpiperazin in 30 ml vollentsalztem Wasser zugetropft. Während der Zugabe war eine Temperaturerhöhung von wenigen Grad festzustellen. Nach beendigter Zugabe wurde das Reaktionsgemisch noch 3 h unter Rückfluss gerührt. Nach Abkühlen der Lösung wurde am Rotationsverdampfer überschüssiges Wasser entfernt. Zum flüssigen Destillationsrückstand wurde eine gesättigte Piperazinlösung zugetropft. Unter Wärmeentwicklung bildete sich ein weiß-amorpher Niederschlag.

### Beispiel 3: Synthese von Dimethyl-methylaminodiphosphonsäure (DAMP-H₄)

0,9 mol Dimethylformamid wurden in einem 500 ml Rundkolben vorgelegt und mit 1,8 mol Phosphonsäure und 225 ml Essigsäureanhydrid vermischt. Die Reaktionslösung wurde bei 90°C für 90 Minuten gerührt. Im Anschluss wurden unter reduziertem Druck von -300 mbar die entstandene Essigsäure sowie überschüssiges Wasser am Rotationsverdampfer entfernt und der Rückstand bei 85°C 4 h im Trockenschrank von restlichem Lösemittel befreit.

### Beispiel 4: Synthese einer wässrigen Lösnatriumsalzes von Morpholin-methylaminodiphosphonsäure (MOMP-H-Na₃)

0,289 mmol Morpholin-methylaminodiphosphonsäure (MOMP-H₄) wurden in 50 ml vollentsalztem Wasser gelöst und 0,867 mmol NaOH zugegeben. Für die Lösung wurde ein pH Wert von - 9 erhalten.

### Beispiel 5: Synthese von Morpholin-methylaminodiphosphonsäure tetraethylester (MOMP-Et₄)

Für die Darstellung des MOMP-Et₄ werden 0,1 mol Morpholin im Reaktor vorgelegt und gerührt. Es werden weiter 0,1 mol Triethoxymethan zugetropft. Anschließend werden 0,2 mol Diethylphosphit zugegeben. Das Gemisch wird auf 120°C erhitzt und 4 h bei dieser Temperatur gerührt. Nach Abschluss der Reaktion wird das Produkt mittels Vakuumdestillation bei 50 mbar und 150°C gereinigt.

| **Name** | **Hersteller** | **Reinheit** | **CAS** | **Molare Masse** |
|---|---|---|---|---|
| Morpholin | Merck | ≥99,0% | 110-91-8 | 87,12g/mol |
| Triethoxymethan | Alfa Aesar | 98% | 122-51-0 | 148,20g/mol |
| Diethylphosphit | Acros Organics | 98% | 762-04-9 | 138,10g/mol |

In einer bevorzugten Ausführung der Erfindung sind alle Reste **R³**, **R⁴**, **R⁵** und **R⁶** Kationen oder organische Reste, besonders bevorzugt Ethyl, da entsprechend substituierte Verbindungen als Katalysator in der Polyurethanschaumsynthese wirken können. Die Verwendung solcher Verbindungen ist besonders vorteilhaft, da diese sowohl die Synthese des Polyurethans beschleunigen, als auch die Flammschutzeigenschaften des fertigen Polymers verbessern. Verbindungen mit P-OH-Gruppe wie beispielsweise MOMP-H₄ zeigen eine entsprechende katalytische Wirkung nicht, wahrscheinlich aus dem Grund, dass diese in der Form eines Zwitterions vorliegen (PO⁻/ NH⁺), dessen quartäre Aminogruppe keine katalytische Eigenschaften aufweisen.

Die sogenannte Startzeit bis die Schaumbildung verkürzt sich signifikant bei der Verwendung entsprechend substituierter Verbindungen im Vergleich zu Verbindungen mit P-OH-Gruppe wie beispielsweise MOMP-H₄, wie anhand folgender Versuche gezeigt wird.

Generelle Methode: Polyol (22,5 g) wird mit dem Katalysator (Ethylenglykol, 1,05 g) Pentan (4,5 g) und dem jeweiligen Flammschutzmittel bei 1000 U/min gemischt. Das Isocyanat (MDI, 60,0 g) wird bei ausgeschaltetem Disperser zugegeben und die Mischung 10 Sekunden bei 1500 U/min gerührt und dann ohne Zögern umgefüllt.

| **Flammschutzmittel** | **Beladung [php]*** | **Zeit [s] bis zur Schäumung** |
|---|---|---|
| ohne | 0 | 15 |
| MOMP-H₄ | 7,5 | 15 |
| MOMP-H₄ | 5,0 | 10 |
| MOMP-H₄ | 2,5 | 5 |
| MOMP-Et₄ | 10 | 0-1 |
| Exolit OP 550 | 7,5 | 15 |
| Exolit OP 550 | 2,5 | 15 |
| TCPP | 7,5 | 10 |
| TCPP | 2,5 | 10 |

| | | |
|---|---|---|
| *php - parts per hundred parts of polyol, Teil pro 100 Teile Polyol | | |

### Beispiel 6: Synthese von Morpholin-methylaminodi-DOPO (MOM-DOPO₂)

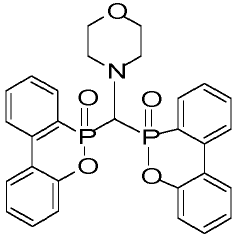

| **Name** | **Smp.** | **Sdp.** | **M** |
|---|---|---|---|
| DOPO (Metadynea DOP11 S25) | -120°C | -400°C | 216,18g/mol |
| 4-FM (AlfaAesar >98%) | 20°C | 240°C | 115,13g/mol |
| Ac₂O (Merck >98%) | -73°C | 139°C | 102,09g/mol |
| MOM-DOPO₂ | n.a. | n.a. | 529,47g/mol |
| Wasser | 0°C | 100°C | 18,02g/mol |
| Essigsäure | 17°C | 118°C | 60,05g/mol |

Bei der Reaktion handelt es sich um eine Kondensationsreaktion, bei der aus der Formylfunktion am 4-Formylmorpholin (4-FM) und der P-H-Gruppen der DOPO-Moleküle unter Abspaltung von H₂O das Produkt MOM-DOPO₂ entsteht. Hierfür werden unter Rühren 40 g DOPO in 100 ml Acetylsäureanhydrid (Ac₂O) in einem 250 ml Kolben gelöst und die Mischung auf 120°C erwärmt. Wenn die Temperatur erreicht wird, werden 10 g 4-FM dazugegeben. Nach 5 Stunden wird mit 80 ml Wasser neutralisiert und die Außentemperierung eingestellt. Nach Abkühlen fällt ein weißer Feststoff aus, der abfiltriert und mit Wasser nachgewaschen wird. Als weiteres Nebenprodukt entsteht Essigsäure.

### Beispiel 7: Synthese von Morpholin-methylaminodiphosphonsäure Zn-Salz (MOMP-H₂Zn)

Für die Darstellung des Zn-Salzes (1:1), werden 50,0 g (0,191 mol) MOMP in 500 g H₂O dispergiert und mit 14,6 g ZnO (0,191 mol) versetzt. Das Reaktionsgemisch wird auf 95°C erhitzt und 4 h bei dieser Temperatur gerührt. Anschließend wird der Ansatz auf unter 50°C gekühlt und der Feststoff von der Mutterlauge getrennt. Der Filterkuchen wird bei 120°C in der Umluft getrocknet.

| **Name** | **Hersteller** | **Reinheit/Mₙ** | **CAS** |
|---|---|---|---|
| MOMP | siehe Beispiel 1 | | |
| ZnO | Alfa Aesar | min. 99,0% | 1314-13-2 |
| H₂O dest. | | | |

### Beispiel 8: Synthese von Piperazine-di methylaminodiphosphonsäure (PIMP-H₄)

| **Name** | **Hersteller** | **Reinheit** | **CAS** | **Molare Masse** |
|---|---|---|---|---|
| 1,4-Diformylpiperazin | Alfa Aesar | 98+% | 4164-39-0 | 142,16g/mol |
| Essigsäureanhydrid | VWR | AnalaR NORMAPU | 108-24-7 | 102,09g/mol |
| Phosphorige Säure | Alfa Aesar | 97% | 13598-3-2 | 82,0g/mol |
| H₂O dest. | | | | |
| NaOH-Lösung 50% | | | 1310-73-2 | 39,997g/mol |
| Schwefelsäure | Merck | 95-97% | 7664-93-9 | 98,08g/mol |

0,1 mol 1,4-Diformylpiperazin und 0,1 mol Essigsäureanhydrid werden im Reaktor vorgelegt und verrührt. Die Mischung wird auf 120°C erhitzt. Separat werden 0,4 mol Phosphorige Säure in 0,3 mol Essigsäureanhydrid gelöst. Diese Lösung wird anschließend in den Reaktor getropft. Abschließend werden noch weitere 0,5 mol Essigsäureanhydrid zugegeben und der Ansatz auf 135°C erhitzt. Nach 30 Minuten Reaktionszeit werden 2,1 mol Wasser zugetropft. Nach weiteren 40 Minuten Reaktionszeit wird der Ansatz auf Raumtemperatur abgekühlt. Dann werden 70 ml Natriumhydroxidlösung zugegeben. Das Produkt wird von der Mutterlauge abgetrennt und in Wasser gelöst. Anschließend wird die Lösung mit Schwefelsäure wieder ausgefällt und das Produkt abfiltriert, gewaschen und getrocknet.

### Flammschutzbeispiele:

### Zusammensetzungen

Zur Überprüfung der Flammschutzeigenschaften und zur Klassifizierung der erfindungsgemäßen Flammschutzmittelzusammensetzungen in unterschiedlichen Polymeren wurde an IEC/DIN EN 60695-11-10-normgerechten Prüfkörpern der UL94 Test durchgeführt.

### UL94-V Test

Pro Messung wurden jeweils 5 Prüfkörper in einer vertikalen Position eingespannt und an das freie Ende einer Bunsenbrennerflamme gehalten. Dabei wurden die Brennzeit und auch das Abfallen brennender Teile mit Hilfe eines unter dem Prüfkörper angeordneten Wattebausches bewertet. Die exakte Durchführung der Versuche und der Beflammung mit einer 2 cm hohen Bunsenbrennerflamme wurde nach den Vorgaben der Underwriter Laboratories, Standard UL94, durchgeführt.

Als Ergebnisse sind die Einstufungen in die Brandschutzklassen V-0 bis V-2 angegeben. Dabei bedeutet V-0, dass die Gesamtbrenndauer von 5 getesteten Prüfkörpern weniger als 50 Sekunden betrug und der Wattebausch nicht durch herabtropfende glühende oder brennende Bestandteile des Prüfkörpers entzündet wurde. Die Einstufung V-1 bedeutet, dass die Gesamtbrenndauer von 5 getesteten Prüfkörpern mehr als 50 Sekunden aber weniger als 250 Sekunden betrug und ebenfalls der Wattebausch nicht entzündet wurde. V-2 bedeutet, dass die Gesamtbrenndauer von 5 getesteten Prüfkörpern zwar weniger als 250 Sekunden betrug, der Wattebausch jedoch durch herabtropfende Prüfkörperbestandteile in mindestens einem der 5 Tests entzündet wurde. Die Abkürzung NC steht für "nicht klassifizierbar" und bedeutet, dass eine Gesamtbrenndauer von mehr als 250 Sekunden gemessen wurde. In vielen Fällen der Nicht-Klassifizierbarkeit verbrannte der Prüfkörper vollständig.

### UL94-HB Test

Pro Messung wurden jeweils mindestens 3 Prüfkörper in einer horizontalen Position eingespannt und an das freie Ende einer Bunsenbrennerflamme gehalten. Dabei wurden die Abbrandgeschwindigkeit und die Gesamtbrandstrecke bewertet. Die exakte Durchführung der Versuche und der Beflammung mit einer 2 cm hohen Bunsenbrennerflamme wurde nach den Vorgaben der Underwriter Laboratories, Standard UL94, durchgeführt.

Als Ergebnisse ist die Einstufung in die Brandschutzklasse HB angegeben. Die Klassifizierung "HB" bedeutet, dass die Abbrandgeschwindigkeit zwischen zwei Markierungen, die erste 25 mm entfernt vom beflammten Ende, die zweite 100 mm entfernt vom beflammten Ende, geringer als 40 mm/min war. Außerdem Überschritt die Flammfront nicht die 100 mm Markierung. Die Abkürzung NC steht für "nicht klassifizierbar" und bedeutet, dass über eine Strecke von 75mm die Abbrandgeschwindigkeit > 40 mm/min oder die Gesamtbrandstrecke >100 mm war.

### Beispiel 9: Flammschutzeigenschaften von MOMP-H₄ in Polypropylen

### Polymere

Zur Herstellung der flammgeschützten Zusammensetzungen wurden in den nachfolgenden Beispielen folgende Polymermaterialien eingesetzt:
Polypropylen (PP) HD120 MO der Borealis AG

Mit Hilfe eines Doppelschnecken-Extruder, Modell Process 11, Firma Thermo Fisher Scientific Inc., wurde bei den für Polypropylen üblichen Extrusionsbedingungen ein Granulat mit einer Korngröße von etwa 3x1x1 mm erzeugt. Der Extrusionsprozess wurde bei einem Durchsatz von etwa 5-7 kg/h und einer Schraubengeschwindigkeit von 450-500 U.p.M. und einer Temperatur der Extrusionszone von 190-220°C durchgeführt. Durch anschließendes Heißpressen wurden UL94-konforme Prüfkörper guter Qualität erhalten. Die Dicke der Prüfkörper betrug 1,6 bzw. 3,2 mm. Beim Extrusionprozess wurde das gemäß Beispiel 1 hergestellte Phosphonat in das Polymermaterial eingearbeitet.

**Tabelle 1:**

| **#** | **PP [%]** | **Dicke [mm]** | **MOMP [%]** | **Budit 667** | **Budit 240** | **UL94** | **t₁** | **t₂** | **t_{ges}** |
|---|---|---|---|---|---|---|---|---|---|
| 0 | 100 | 1,6 | 0 | - | - | N.C. | 376^{*} | -^{*} | 376 |
| 1 | 75 | 1,6 | 25 | - | - | N.C. | 95 | 70 | 165 |
| 2 | 72,5 | 1,6 | 27,5 | - | - | V-2 | 9 | 54 | 63 |
| 3 | 75 | 3,2 | 25 | - | - | V-0. | 4 | 6 | 10 |
| 4 | 72,5 | 3,2 | 27,5 | - | - | V-0 | 4 | 4 | 8 |
| 5 | 75 | 3,2 | - | 25 | - | V-0 | 5 | 5 | 10 |
| 6 | 75 | 1,6 | - | - | 25 | N.C | 231 | 34 | 265 |
| 7 | 72,5 | 1,6 | - | - | 27,5 | N.C | 227 | 28 | 255 |

### Beispiel 10: Flammschutzeigenschaften von MOMP-H₄ in Polyurethan (PU)

Zur Herstellung der flammgeschützten Zusammensetzungen wurden folgende Komponenten in einer Schäumungsreaktion miteinander umgesetzt:
Polyol: 22,5 g
Katalysator (Ethylenglykol): 1,05 g
Pentan: 4,5 g
Isocyanat (MDI): 60 g

Das erfindungsgemäße Flammschutzmittel wurde der Polyolkomponente vor der Reaktion zugesetzt. Die in der folgenden Tabelle aufgeführten Masseanteile von Flammschutzmittel beziehen sich auf die Summe der Massen von Polyol, Katalysator, Flammschutzmittel und Isocyanat.

| **#** | **PU [%]** | **Flammschutzmittel [%]** | **Beladung [%]** | **UL94 -HB** | **t_{ges}** |
|---|---|---|---|---|---|
| 0 | 100 | - | - | N.C. | 50 |
| 1 | 98,2 | MOMP-H₄ | 1,8 | HB | 7 |
| 2 | 98,2 | MOMP-2K^{#} | 1,8 | N.C. | 30 |
| 3 | 91,8 | MOMP-2K^{#} | 8,2 | N.C. | 20 |
| 4 | 98,2 | DAMP-H₄ | 1,8 | HB | 4 |
| 5 | 98,2 | TCPP | 1,8 | N.C. | 26 |
| 6 | 97,1 | OP 550 | 2,9 | HB | 32 |
| 7 | 97,4 | MOMP-Et₄ | 2,6 | HB | 4 |
| 8** | 97,4 | MOMP-Et₄ | 2,6 | HB | 6 |

| | | | | | |
|---|---|---|---|---|---|
| ^{#} zweifaches Kaliumsalz von MOMP-H₄ ** ohne Katalysator | | | | | |

### Beispiel 11: Flammschutzeigenschaften von MOMP-H₄ in thermoplastischem Polyurethan (TPU)

Zur Herstellung der flammgeschützten Zusammensetzungen wurden in den nachfolgenden Beispielen folgende Polymermaterialien eingesetzt:
Thermoplastisches Polyurethan (TPU) Elastollan 1185 A der Firma BASF SE

Mit Hilfe eines Doppelschnecken-Extruder, Modell Process 11, Firma Thermo Fisher Scientific Inc., wurde bei den für TPU üblichen Extrusionsbedingungen ein Granulat mit einer Korngröße von etwa 3×1×1 mm erzeugt. Der Extrusionsprozess wurde bei einem Durchsatz von etwa 5 kg/h und einer Schraubengeschwindigkeit von 300 U.p.M. und einer Temperatur der Extrusionszone von circa 205°C durchgeführt. Durch anschließendes Heißpressen wurden UL94-konforme Prüfkörper guter Qualität erhalten. Die Dicke der Prüfkörper betrug 0,8 mm. Beim Extrusionprozess wurde das gemäß Beispiel 1 hergestellte Phosphonat in das Polymermaterial eingearbeitet.

| **#** | **TPU [%]** | **Budit 315 [%]** | **Budit 342 [%]** | **Budit 240[%]** | **MOMP [%]** | **Beladung [%]** | **UL94** | **t₁** | **t₂** | **t_{ges}** | **Info** |
|---|---|---|---|---|---|---|---|---|---|---|---|
| 0 | 100 | - | - | - | - | 0 | N.C. | 323^{∼} | -^{∼} | 323 | butc |
| 1 | 90 | - | 5 | - | 5 | 10 | V-2 | 4 | 2 | 6 | 4/5 ditc^{#} |
| 2 | 90 | 5 | - | - | 5 | 10 | V-0 | 2 | 4 | 6 | - |
| 3 | 90 | - | - | - | 10 | 10 | V-0 | 9 | 5 | 14 | - |
| 4 | 90 | 10 | - | - | - | 10 | V-0 | 3 | 5 | 8 | - |
| 5 | 90 | - | 10 | - | - | 10 | V-2 | 11 | 5 | 16 | 5/5 ditc^{#} |
| 6 | 90 | 5 | - | 5 | - | 10 | V-2 | 3 | 1 | 4 | 5/5 ditc^{#} |

| | | | | | | | | | | | |
|---|---|---|---|---|---|---|---|---|---|---|---|
| *butc = Prüfkörper brennt bis zur Klammer ab ^{#}ditc = herunterfallende Tropfen entzünden Baumwolle ^{~} keine zweite Beflammung möglich, da Prüfkörper bereits nach erster Beflammung abgebrannt ist | | | | | | | | | | | |

### Beispiel 12: Flammschutzeigenschaften von MOMP-H₂Zn in thermoplastischem Polyamid (PA)

Zur Herstellung der flammgeschützten Zusammensetzungen wurden in den nachfolgenden Beispielen folgende Materialien eingesetzt:
Polyamide 6 : Ultramid B3S (BASF)
Glasfasern (GF) für PA : CS7928 (Lanxess)

Mit Hilfe eines Doppelschnecken-Extruder, Modell Process 11, Firma Thermo Fisher Scientific Inc., wurde bei den für PA6 üblichen Extrusionsbedingungen ein Granulat mit einer Korngröße von etwa 3×1×1 mm erzeugt. Der Extrusionsprozess wurde bei einem Durchsatz von etwa 5 kg/h und einer Schraubengeschwindigkeit von 300 U.p.M. und einer Temperatur der Extrusionszone von circa 280°C durchgeführt. Durch anschließendes Heißpressen wurden UL94-konforme Prüfkörper guter Qualität erhalten. Die Dicke der Prüfkörper betrug 0,8 mm. Beim Extrusionprozess wurde das gemäß Beispiel 7 (MOMP-H₂Zn) hergestellte Phosphonat in das Polymermaterial eingearbeitet.

| **#** | **PA6 [%]** | **GF [%]** | **Budit 611 [%]** | **Exolit** [%]** | **MOMP-H2Zn** | **Budit 341 [%]** | **UL9 4-V** | **t₁ [s]** | **t₂ [S]** | **t_{ges} [S]** | **Info** |
|---|---|---|---|---|---|---|---|---|---|---|---|
| 0 | 44,8 | 30 | 23 | 2,2 | | | V0 | 8 | 10 | 18 | |
| 1 | 55 | 30 | | | 15 | | N.C. | 243 | ~ | | butc |
| 2 | 50 | 30 | | | 20 | | V0 | 12 | 5 | 17 | |
| 3 | 45 | 30 | | | 25 | | V0 | 6 | 2 | 8 | |
| 4 | 45 | 30 | | | 17,5 | 7,5 | V0 | 9 | 9 | 18 | |

| | | | | | | | | | | | |
|---|---|---|---|---|---|---|---|---|---|---|---|
| ^{*}butc = Prüfkörper brennt bis zur Klammer ab **Exolit OP 1230 ^{~} keine zweite Beflammung möglich, da Prüfkörper bereits nach erster Beflammung abgebrannt ist | | | | | | | | | | | |

### Figurenbeschreibung:

Die anhängenden Figuren repräsentieren thermogravimetrische Messungen, dabei zeigen:
- Figur 1:: Differenzkalorimetrische Messung von DAMP-H₄
- Figur 2:: Thermogravimetrische Messung von DAMP-H₄
- Figur 3:: Differenzkalorimetrische Messung von MOMP-H₄
- Figur 4:: Thermogravimetrische Messung von MOMP-H₄
- Figur 5:: Differenzkalorimetrische Messung von ATMP
- Figur 6:: Thermogravimetrische Messung von ATMP

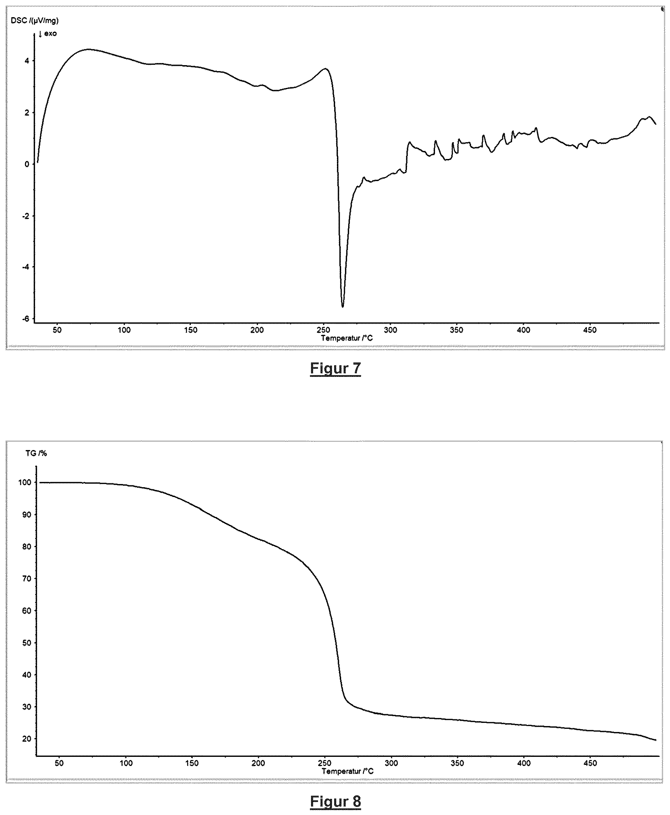

- Figur 7:: Differenzkalorimetrische Messung von MOMP-Et₄
- Figur 8:: Thermogravimetrische Messung von MOMP-Et₄

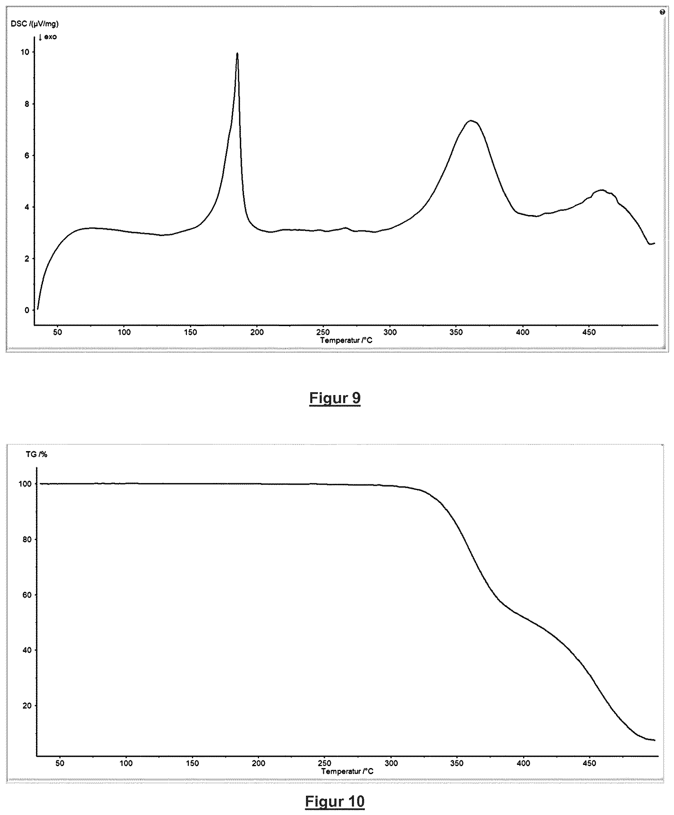

- Figur 9:: Differenzkalorimetrische Messung von MOMP-DOPO₂
- Figur 10:: Thermogravimetrische Messung von MOM-DOPO₂

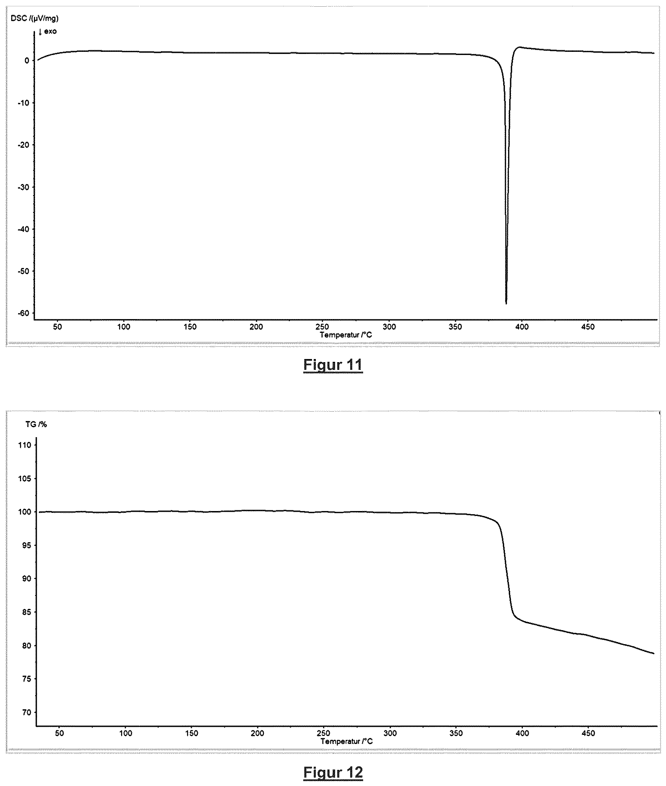

- Figur 11:: Differenzkalorimetrische Messung von MOMP-H₂Zn
- Figur 12:: Thermogravimetrische Messung von MOMP-H₂Zn

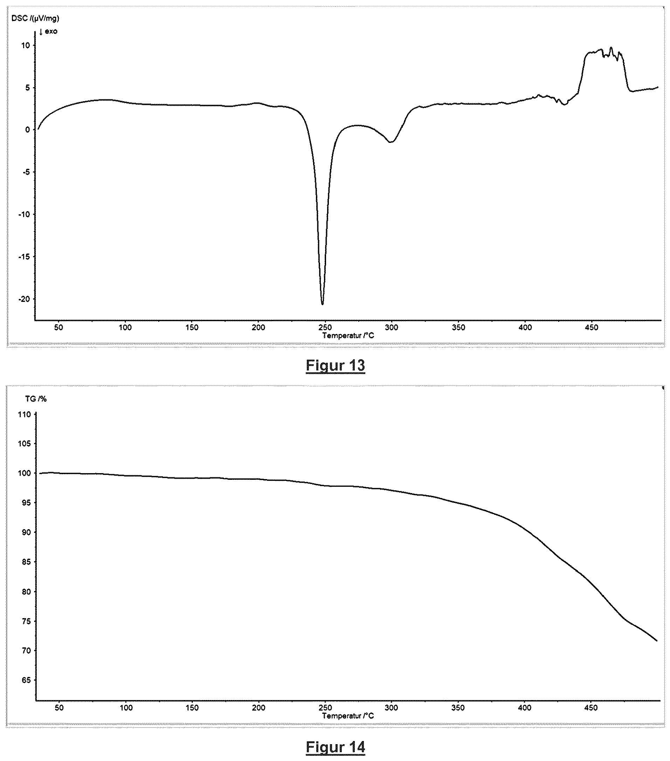

- Figur 13:: Differenzkalorimetrische Messung von PIMP
- Figur 14:: Thermogravimetrische Messung von PIMP

| **Material** | **1% Gewichtsverlust** | **2% Gewichtsverlust** | **Restmasse bei 500°C** |
|---|---|---|---|
| MOMP-H₄ | 251,7°C | 276,9°C | 64,29% |
| DAMP-H₄ | 244,5°C | 273,1°C | 71,41% |
| ATMP-H₄ | 176,4°C | 193,9°C | 72,43% |
| MOMP-Et₄ | 101,7°C | 117,1°C | 19,58% |
| MOM-DOPO₂ | 305,5°C | 318,9°C | 7,50% |
| MOMP-H₂Zn | 375,0°C | 382,3°C | 78,75% |
| PIMP-H₄ | 199,3 | 245,4 | 71,63% |

## Patentansprüche

1. Zusammensetzung, welche ein Polymermaterial, insbesondere ein thermoplastisches Polymermaterial, und darin enthalten und/oder gebunden ein halogenfreies Flammschutzmittel in einer Menge von 1 bis 40 Gew.-%, bezogen auf die gesamte Zusammensetzung, aufweist, **dadurch gekennzeichnet, dass** das Flammschutzmittel eine Verbindung der Formel (I), dessen korrespondierendes Ammoniumsalz, dessen korrespondierendes Phosphonatsalz oder ein Gemisch der vorgenannten ist: 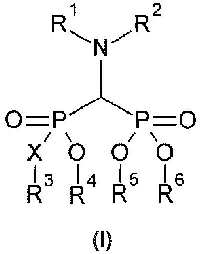 wobei
**(i) R¹** und **R²** gleiche oder verschiedene Substituenten sind und aus der Gruppe ausgewählt sind, bestehend aus linearen, verzweigten oder zyklischen Alkylen, Alkenylen und Alkinylen, unsubstituierten und alkylsubstituierten Phenylen, mononuklearen und multinuklearen Aromaten mit bis zu 4 Kernen, mononuklearen oder multinuklearen Heteroaromaten mit bis zu 4 Kernen, Silylen, Allyl-, Alkyl- oder Arylalkoholen, oder
**(ii) R¹** und **R²** gemeinsam, das N-Atom eingeschlossen, einen gesättigten oder einfach ungesättigten oder mehrfach ungesättigten Heterozyklus mit 4-8 Ringatomen, die ausgewählt sind aus Kohlenstoff, Sauerstoff, Schwefel, Phosphor, Silizium und Stickstoff, bilden, wobei an dem Heterozyklus, wenn er als Ringatome Stickstoffatome aufweist, diese Stickstoffatome mit H, einer Alkyl-, einer Aryl- oder einer Methylbisphosphonatgruppe der folgenden Struktur (II) substituiert sind, 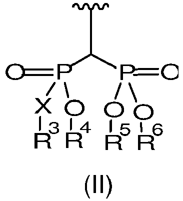 und wobei an dem Heterozyklus, wenn er als Ringatome Kohlenstoff, Phosphor oder Silizium aufweist, diese Atome Substituenten aufweisen können, ausgewählt aus der Gruppe bestehend aus H, Alkyl, Aryl, -NH₂, -NHR, -NR₂, -OH, -OR, =O, -I, -Cl, -Br, mit R= Alkyl, Aryl,
und wobei **-X-** ein Sauerstoffatom, **-O-,** ist oder **-X-** eine **Einfachbindung** ist und
wobei
**(i) R³**, **R⁴**, **R⁵** und **R⁶** gleiche oder verschiedene Substituenten sind und ausgewählt sind aus der Gruppe, bestehend aus H, linearen, verzweigten oder zyklischen Alkylen, Alkenylen und Alkinylen, unsubstituierten und alkylsubstituierten Phenylen, multinuklearen Aromaten mit bis zu 4 Kernen, mononuklearen oder multinuklearen Heteroaromaten mit bis zu 4 Kernen, Silylen, Allyl-, Alkyl- oder Arylalkoholen, Kationen, wobei das Kation Na⁺, K⁺, Mg²⁺, Ca²⁺, B³⁺, Al³⁺, Zn²⁺, NH₄⁺ oder das Ammoniumion einer Aminverbindung, ausgewählt aus der Gruppe, bestehend aus Melamin oder dessen Kondensationsprodukten, vorzugsweise Melam, Melem, Melon, Harnstoff, Guanidin, Morpholin und Piperazin, ist, wobei
(ia) wenn **R¹** und **R²** gleich Methyl sind, **R³**, **R⁴**, **R⁵** und **R⁶** gleiche oder verschiedene Substituenten sind und ausgewählt sind aus der Gruppe, bestehend aus linearen, verzweigten oder zyklischen Alkylen, Alkenylen und Alkinylen, unsubstituierten und alkylsubstituierten Phenylen, multinuklearen Aromaten mit bis zu 4 Kernen, mononuklearen oder multinuklearen Heteroaromaten mit bis zu 4 Kernen, Silylen, Allyl-, Alkyl- oder Arylalkoholen, Kationen, wobei das Kation Mg²⁺, Ca²⁺, B³⁺, Al³⁺, Zn²⁺, oder das Ammoniumion einer Aminverbindung, ausgewählt aus der Gruppe, bestehend aus Melamin oder dessen Kondensationsprodukten, vorzugsweise Melam, Melem, Melon, Harnstoff, Guanidin, Morpholin und Piperazin, ist
und/oder
**(ii)** wenn **-X-** ein Sauerstoffatom, **-O-,** ist, **-OR³** und **-OR⁴** gemeinsam und/oder **-OR⁵** und **-OR⁶** gemeinsam, das P-Atom der Phosphonatgruppe eingeschlossen, einen cyclischen Phosphonsäureester mit einer Ringgröße von 4-10 Atomen bilden, und/oder
**(iii)** wenn **-X-** eine Einfachbindung ist, **R³** und **-OR⁴** gemeinsam, das P-Atom der Phosphinatgruppe eingeschlossen, einen cyclischen Phosphinsäureester mit einer Ringgröße von 4-10 Atomen bilden und/oder **-OR⁵** und **-OR⁶** gemeinsam, das P-Atom der Phosphonatgruppe eingeschlossen, einen cyclischen Phosphonsäureester mit einer Ringgröße von 4-10 Atomen bilden.

2. Zusammensetzung nach Anspruch 1, **dadurch gekennzeichnet, dass R¹** und **R²** gemeinsam, das N-Atom eingeschlossen, einen Morpholin- oder Piperidinring bilden.

3. Zusammensetzung nach Anspruch 1, **dadurch gekennzeichnet, dass R¹** und **R²** gleiche oder verschiedene Substituenten, wobei mindestens einer der Substituenten Melamin ist, wobei die Stickstoffatome der Aminogruppen mit H, einer Alkyl-, einer Aryl- oder einer Methylbisphosphonatgruppe der folgenden Struktur (II) substituiert sind

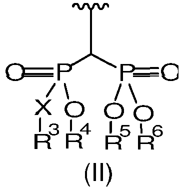

4. Zusammensetzung nach einem der vorausgehenden Ansprüche, **dadurch gekennzeichnet, dass** das trockene Flammschutzmittel einen Masseverlust von 10 Gew-% ab einer Temperatur von 320°C, bevorzugt ab einer Temperatur von 335°C, besonders bevorzugt ab einer Temperatur von 350°C erreicht, wobei trocken bedeutet, dass der Wassergehalt < 0,5 Gew-% beträgt und wobei der Masseverlust durch Thermogravimetrie unter Stickstoffatmosphäre mit einer Heizrate von 10 K/min bestimmt wird.

5. Zusammensetzung nach einem der vorausgehenden Ansprüche, **dadurch gekennzeichnet, dass** der Phosphorgehalt des Flammschutzmittels wenigstens 19,5 Gew-%, bevorzugt wenigstens 20 Gew-%, besonders bevorzugt wenigstens 21,5 Gew-%, am bevorzugtesten wenigstens 23,5 Gew-% beträgt.

6. Zusammensetzung nach einem der vorausgehenden Ansprüche, **dadurch gekennzeichnet, dass** mindestens eine, vorzugsweise zwei, noch bevorzugter mindestens drei, am bevorzugtesten vier der Gruppen **R³**, **R⁴**, **R⁵** und **R⁶** ein Kation oder H, vorzugsweise H sind, wobei das Kation Na⁺, K⁺, Mg²⁺, Ca²⁺, B³⁺, Al³⁺, Zn²⁺, NH₄⁺ oder das Ammoniumion einer Aminverbindung, ausgewählt aus der Gruppe, bestehend aus Melamin oder dessen Kondensationsprodukten, vorzugsweise Melam, Melem, Melon, Harnstoff, Guanidin, Morpholin und Piperazin, ist.

7. Zusammensetzung nach einem der vorausgehenden Ansprüche, **dadurch gekennzeichnet, dass** mindestens eine der Gruppen **R³**, **R⁴**, **R⁵** und **R⁶** ein organischer Rest ist, wobei jeder dieser organischen Reste mehr als drei Kohlenstoffatome aufweist.

8. Zusammensetzung nach einem der vorausgehenden Ansprüche, **dadurch gekennzeichnet, dass** das Polymermaterial ein Thermoplast ist, ausgewählt aus der Gruppe bestehend aus Polyvinylbutyral (PVB), Polypropylen (PP), Polyethylen (PE), Polyamid (PA), Polyester wie Polybutylenterephthalat (PBT), Polyethylenterephthalat (PET), Polyurethan (PU), Polyharnstoff, Polyphenylenoxid, Polyacetal, Polyacrylat, Polymethacrylat, Polyoxymethylen, Polyvinylacetal, Polystyrol, Acrylnitril-Butadien-Styrol (ABS), Acrylnitril-Styrol-Acrylester (ASA), Polycarbonat, Polyethersulfon, Polysulfonat, Polytetrafluoroethylen, Polyharnstoff, Formaldehydharze, Melaminharze, Polyetherketon, Polyvinylchlorid, Polylactid, Polysiloxan, Phenolharze, Epoxidharze, Poly(imid), Bismaleimid-Triazin, thermoplastischem Polyurethan, Ethylen-Vinylacetat-Copolymer (EVA), Copolymeren und/oder Mischungen der vorgenannten Polymere.

9. Zusammensetzung nach einem der vorausgehenden Ansprüche, **dadurch gekennzeichnet, dass** das Polymermaterial das Flammschutzmittel in einer Menge von wenigstens 3 Gew.-% oder wenigstens 5 Gew.-% oder wenigstens 10 Gew.-% oder wenigstens 15 Gew.% und/oder in einer Menge von höchstens 35 Gew.-% oder höchstens 30 Gew.-% oder höchstens 25 Gew.-% enthält, bezogen auf die gesamte Zusammensetzung.

10. Zusammensetzung nach einem der vorausgehenden Ansprüche, **dadurch gekennzeichnet, dass** sie wenigstens eine weitere flammschützende Komponente aufweist, die vorzugsweise ausgewählt ist unter Stickstoffbasen, Melaminderivaten, Phosphaten, Pyrophosphaten, Polyphosphaten, organischen und anorganischen Phosphinaten, organischen und anorganischen Phosphonaten und Derivaten der vorgenannten Verbindungen, vorzugsweise ausgewählt unter Ammoniumpolyphosphat, mit Melamin, Melaminharz, Melaminderivaten, Silanen, Siloxanen, Silikonen oder Polystyrolen beschichteten und/oder beschichteten und vernetzten Ammoniumpolyphosphatpartikeln, sowie 1,3,5-Triazinverbindungen, einschließlich Melamin, Melam, Melem, Melon, Ammelin, Ammelid, 2-Ureidomelamin, Acetoguanamin, Benzoguanamin, Diaminphenyltriazin, Melaminsalze und -addukte, Melamincyanurat, Melaminborat, Melaminorthophosphat, Melaminpyrophosphat, Di-melaminpyrophosphat, Aluminiumdiethylphosphinat, Melaminpolyphosphat, oligomere und poly-mere 1,3,5-Triazinverbindungen und Polyphosphate von 1,3,5-Triazinverbindungen, Guanin, Piperazinphosphat, Piperazinpolyphosphat, Ethylendiaminphosphat, Pentaerythritol, Dipen-taerythritol, Borphosphat, 1,3,5-Trihydroxyethylisocyanurat, 1,3,5-Triglycidylisocyanurat, Trially-Iisocyanurat und Derivaten der vorgenannten Verbindungen.

11. Zusammensetzung nach einem der vorausgehenden Ansprüche, **dadurch gekennzeichnet, dass** sie wenigstens einen Füllstoff aufweist, der unter Calciumcarbonat, Silicaten, wie Talk, Ton oder Glimmer, Kieselerde, Calcium- und Bariumsulfat, Aluminiumhydroxid, Glasfasen und Glaskugeln sowie Holzmehl, Cellulosepulver und Rußen und Graphiten ausgewählt ist.

12. Zusammensetzung nach einem der vorausgehenden Ansprüche, **dadurch gekennzeichnet, dass** sie Polymermaterial in einer Menge von mindestens 50 Gew-%, vorzugsweise mindestens 70 Gew-%, besonders bevorzugt mindestens 80 Gew-% und am bevorzugtesten mindestens 90 Gew-%, aufweist.

13. **Verfahren** zur Herstellung einer Zusammensetzung nach einem der vorausgehenden Ansprüche, **dadurch gekennzeichnet, dass** das Flammschutzmittel eine Co-Kondensationskomponente oder Co-Additionskomponente des Polymermaterials ist, die bei der Herstellung des Polymermaterials durch Polykondensation oder Polyaddition in das Polymermaterial eingebracht wird, wobei das Polymermaterial vorzugsweise ein Polyester oder ein Polyurethan ist.

14. **Flammschutzmittel,** welches wie es in einem der vorausgehenden Ansprüche definiert ist, **dadurch gekennzeichnet, dass** wenigstens eine der Gruppen **R³**, **R⁴**, **R⁵** und **R⁶** gleich H oder ein Kation ist, wobei das Kation Na⁺, K⁺, Mg²⁺, Ca²⁺, B³⁺, Al³⁺, Zn²⁺, NH₄⁺ oder das Ammoniumion einer Aminverbindung, ausgewählt aus der Gruppe, bestehend aus Melamin oder dessen Kondensationsprodukten, vorzugsweise Melam, Melem, Melon, Harnstoff, Guanidin, Morpholin und Piperazin, ist.

15. **Verwendung** einer Verbindung der Formel (I), deren korrespondierenden Ammoniumsalzes, deren korrespondierenden Phosphonatsalzes oder eines Gemisch der vorgenannten als Flammschutzmittel zur Flammschutzausrüstung von Polymermaterial, insbesondere von thermoplastischem Polymer: 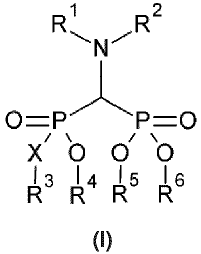 wobei
**(i) R¹** und **R²** gleiche oder verschiedene Substituenten sind und aus der Gruppe ausgewählt sind, bestehend aus linearen, verzweigten oder zyklischen Alkylen, Alkenylen und Alkinylen, unsubstituierten und alkylsubstituierten Phenylen, mononuklearen und multinuklearen Aromaten mit bis zu 4 Kernen, mononuklearen oder multinuklearen Heteroaromaten mit bis zu 4 Kernen, Silylen, Allyl-, Alkyl- oder Arylalkoholen, oder
**(ii) R¹** und **R²** gemeinsam, das N-Atom eingeschlossen, einen gesättigten oder einfach ungesättigten oder mehrfach ungesättigten Heterozyklus mit 4-8 Ringatomen, die ausgewählt sind aus Kohlenstoff, Sauerstoff, Schwefel, Phosphor, Silizium und Stickstoff, bilden, wobei an dem Heterozyklus, wenn er als Ringatome Stickstoffatome aufweist, diese Stickstoffatome mit H, einer Alkyl-, einer Aryl- oder einer Methylbisphosphonatgruppe der folgenden Struktur (II) substituiert sind, 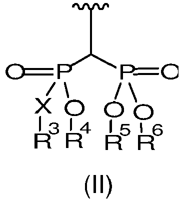 und wobei an dem Heterozyklus, wenn er als Ringatome Kohlenstoff, Phosphor oder Silizium aufweist, diese Atome Substituenten aufweisen können, ausgewählt aus der Gruppe bestehend aus H, Alkyl, Aryl, -NH₂, -NHR, -NR₂, -OH, -OR, =O, -I, -Cl, -Br, mit R= Alkyl, Aryl,
und wobei **-X-** ein Sauerstoffatom, **-O-,** ist oder **-X-** eine **Einfachbindung** ist und
wobei
(i) **R³**, **R⁴**, **R⁵** und **R⁶** gleiche oder verschiedene Substituenten sind und ausgewählt sind aus der Gruppe, bestehend aus H, linearen, verzweigten oder zyklischen Alkylen, Alkenylen und Alkinylen, unsubstituierten und alkylsubstituierten Phenylen, multinuklearen Aromaten mit bis zu 4 Kernen, mononuklearen oder multinuklearen Heteroaromaten mit bis zu 4 Kernen, Silylen, Allyl-, Alkyl- oder Arylalkoholen, Kationen, wobei das Kation Na⁺, K⁺, Mg²⁺, Ca²⁺, B³⁺, Al³⁺, Zn²⁺, NH₄⁺ oder das Ammoniumion einer Aminverbindung, ausgewählt aus der Gruppe, bestehend aus Melamin oder dessen Kondensationsprodukten, vorzugsweise Melam, Melem, Melon, Harnstoff, Guanidin, Morpholin und Piperazin, ist und/oder
(ii) wenn **-X-** ein Sauerstoffatom, **-O-,** ist, **-OR³** und **-OR⁴** gemeinsam und/oder **-OR⁵** und **-OR⁶** gemeinsam, das P-Atom der Phosphonatgruppe eingeschlossen, einen cyclischen Phosphonsäureester mit einer Ringgröße von 4-10 Atomen bilden, und/oder
(iii) wenn **-X-** eine Einfachbindung ist, **R³** und **-OR⁴** gemeinsam, das P-Atom der Phosphinatgruppe eingeschlossen, einen cyclischen Phosphinsäureester mit einer Ringgröße von 4-10 Atomen bilden und/oder **-OR⁵** und **-OR⁶** gemeinsam, das P-Atom der Phosphonatgruppe eingeschlossen, einen cyclischen Phosphonsäureester mit einer Ringgröße von 4-10 Atomen bilden

## Claims

1. A composition which comprises a polymer material, in particular a thermoplastic polymer material, and with a halogen-free flame retardant contained and/or bonded therein in a quantity of 1 to 40% by weight with respect to the total composition, **characterized in that** the flame retardant is a compound with formula (I), its corresponding ammonium salt, its corresponding phosphonate salt or a mixture of the above: 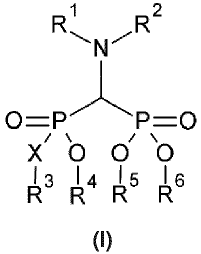 wherein
**(i) R¹** and **R²** are identical or different substituents and are selected from the group consisting of linear, branched or cyclic alkylene, alkenylene and alkinylene, unsubstituted and alkyl-substituted phenylene, mononuclear and multinuclear aromatics containing up to 4 nuclei, mononuclear or multinuclear heteroaromatics containing up to 4 nuclei, silylene, allyl, alkyl or aryl alcohols, or
**(ii) R¹** and **R²** together, including the N atom, form a saturated or monounsaturated or multiple-unsaturated heterocycle containing 4-8 ring atoms which are selected from carbon, oxygen, sulphur, phosphorus, silicon and nitrogen, wherein on the heterocycle, when it comprises nitrogen atoms as the ring atoms, these nitrogen atoms are substituted with H, an alkyl, an aryl or a methyl bisphosphonate group with the following structure (II): 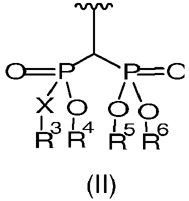 and wherein on the heterocycle, when it comprises carbon, phosphorus or silicon as the ring atoms, these atoms may have substituents selected from the group consisting of H, alkyl, aryl, -NH₂, -NHR, -NR₂, -OH, -OR, =O, -I, -Cl, -Br, in which R = alkyl, aryl,
and wherein **-X-** is an oxygen atom, **-O-,** or **-X-** is a single bond, and
wherein
(i) **R³**, **R⁴**, **R⁵** and **R⁶** are identical or different substituents and are selected from the group consisting of H, linear, branched or cyclic alkylene, alkenylene and alkinylene, unsubstituted and alkyl-substituted phenylene, multinuclear aromatics containing up to 4 nuclei, mononuclear or multinuclear heteroaromatics containing up to 4 nuclei, silylene, allyl, alkyl or aryl alcohols, cations, wherein the cation is Na⁺, K⁺, Mg²⁺, Ca²⁺, B³⁺, Al³⁺, Zn²⁺, NH₄⁺ or the ammonium ion of an amine compound selected from the group consisting of melamine or its condensation products, preferably melam, melem, melon, urea, guanidine, morpholine and piperazine, wherein
**(ia)** when **R¹** and **R²** are equal to methyl, **R³**, **R⁴**, **R⁵** and **R⁶** are identical or different substituents and are selected from the group consisting of linear, branched or cyclic alkylene, alkenylene and alkinylene, unsubstituted and alkyl-substituted phenylene, multinuclear aromatics containing up to 4 nuclei, mononuclear or multinuclear heteroaromatics containing up to 4 nuclei, silylene, allyl, alkyl or aryl alcohols, cations, wherein the cation is Mg²⁺, Ca²⁺, B³⁺, Al³⁺, Zn²⁺, or the ammonium ion of an amine compound selected from the group consisting of melamine or its condensation products, preferably melam, melem, melon, urea, guanidine, morpholine and piperazine, and/or
(ii) when **-X-** is an oxygen atom, **-O-, -OR³** and **-OR⁴** together and/or **-OR⁵** and **-OR⁶** together, including the P atom of the phosphonate group, form a cyclic phosphonic acid ester with a ring size of 4-10 atoms,
and/or
(iii) when **-X-** is a single bond, **R³** and **-OR⁴** together, including the P atom of the phosphinate group, form a cyclic phosphinic acid ester with a ring size of 4-10 atoms and/or **-OR⁵** and **-OR⁶** together, including the P atom of the phosphonate group, form a cyclic phosphonic acid ester with a ring size of 4-10 atoms.

2. The composition according to claim 1, **characterized in that R¹** and **R²** together, including the N atom, form a morpholine or piperidine ring.

3. The composition according to claim 1, **characterized in that R¹** and **R²** are identical or different substituents, wherein at least one of the substituents is melamine, wherein the nitrogen atoms of the amino groups are substituted with H, an alkyl, an aryl or a methyl bisphosphonate group with the following structure (II):

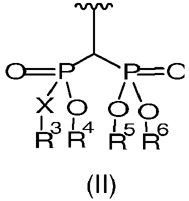

4. The composition according to one of the preceding claims, **characterized in that** the dry flame retardant reaches a loss of mass of 10% by weight above a temperature of 320°C, preferably above a temperature of 335°C, particularly preferably above a temperature of 350°C, wherein dry means that the water content is <0.5 % by weight and wherein the mass loss is determined by thermogravimetry under nitrogen atmosphere with a heating rate of 10 K/min.

5. The composition according to one of the preceding claims, **characterized in that** the phosphorus content of the flame retardant is at least 19.5% by weight, preferably at least 20% by weight, particularly preferably at least 21.5% by weight, most preferably at least 23.5% by weight.

6. The composition according to one of the preceding claims, **characterized in that** at least one, preferably at least two, particularly preferably at least three, most preferably four of the groups **R³**, **R⁴**, **R⁵** and **R⁶** are a cation or H, preferably H, wherein the cation is Na⁺, K⁺, Mg²⁺, Ca²⁺, B³⁺, Al³⁺, Zn²⁺ , NH₄⁺ or the ammonium ion of an amine compound selected from the group consisting of melamine or its condensation products, preferably melam, melem, melon, urea, guanidine, morpholine and piperazine.

7. The composition according to one of the preceding claims, **characterized in that** at least one of the groups **R³**, **R⁴**, **R⁵** and **R⁶** is an organic group, wherein each of said organic groups contains more than three carbon atoms.

8. The composition according to one of the preceding claims, **characterized in that** the polymer material is a thermoplastic selected from the group consisting of polyvinylbutyral (PVB), polypropylene (PP), polyethylene (PE), polyamide (PA), polyesters such as polybutylene terephthalate (PBT), polyethylene terephthalate (PET), polyurethane (PU), polyurea, polyphenylene oxide, polyacetal, polyacrylate, polymethacrylate, polyoxymethylene, polyvinyl acetal, polystyrene, acrylonitrile-butadiene-styrene (ABS), acrylonitrile-styrene-acrylic ester (ASA), polycarbonate, polyethersulphone, polysulphonate, polytetrafluoroethylene, polyurea, formaldehyde resins, melamine resins, polyetherketone, polyvinyl chloride, polylactide, polysiloxane, phenol resins, epoxy resins, poly(imide), bismaleimide-triazine, thermoplastic polyurethane, ethylene-vinyl acetate copolymer (EVA), copolymers and/or mixtures of the aforementioned polymers.

9. The composition according to one of the preceding claims, **characterized in that** the polymer material contains the flame retardant in a quantity of at least 3% by weight or at least 5% by weight or at least 10% by weight or at least 15% by weight and/or in a quantity of at most 35% by weight or at most 30% by weight or at most 25% by weight, with respect to the total composition.

10. The composition according to one of the preceding claims, **characterized in that** it comprises at least one further flame retarding component, which is preferably selected from nitrogen bases, melamine derivatives, phosphates, pyrophosphates, polyphosphates, organic and inorganic phosphinates, organic and inorganic phosphonates and derivatives of the aforementioned compounds, preferably selected from ammonium polyphosphate, with melamine, melamine resin, melamine derivatives, silanes, siloxanes, polysiloxanes, silicones or polystyrenes, coated and/or coated and crosslinked ammonium polyphosphate particles, as well as 1,3,5-triazine compounds, including melamine, melam, melem, melon, ammeline, ammelide, 2-ureidomelamine, acetoguanamine, benzoguanamine, diaminophe-nyltriazine, melamine salts and adducts, melamine cyanurate, melamine borate, melamine orthophosphate, melamine pyrophosphate, dimelamine pyrophosphate, aluminium dieth-ylphosphinate, melamine polyphosphate, oligomeric and polymeric 1,3,5-triazine compounds and polyphosphates of 1,3,5-triazine compounds, guanine, piperazine phosphate, piperazine polyphosphate, ethylenediamine phosphate, pentaerythritol, dipentaerythritol, borophosphate, 1,3,5-trihydroxyethyl isocyanurate, 1,3,5-triglycidyl isocyanurate, triallyl isocyanurate and derivatives of the aforementioned compounds.

11. The composition according to one of the preceding claims, **characterized in that** it comprises at least one filler which is selected from calcium carbonate, silicates such as talc, clay or mica, silica, calcium and barium sulphate, aluminium hydroxide, glass fibres and glass spheres, as well as wood flour, cellulose powder and activated charcoal and graphites.

12. The composition according to one of the preceding claims, **characterized in that** it comprises the polymer material in a quantity of at least 50% by weight, preferably at least 70% by weight, particularly preferably at least 80% by weight and most preferably at least 90% by weight.

13. A method for the production of a composition according to one of the preceding claims, **characterized in that** the flame retardant is a co-condensation component or co-addition component of the polymer material which is introduced into the polymer material by polycondensation or polyaddition, wherein the polymer material is preferably a polyester or a polyurethane.

14. A flame retardant which is as defined in one of the preceding claims, **characterized in that** at least one of the groups **R³**, **R⁴**, **R⁵** and **R⁶** equals H or a cation, wherein the cation is Na⁺, K+, Mg²⁺, Ca²⁺, B³⁺, Al³⁺, Zn²⁺, NH₄⁺ or the ammonium ion of an amine compound selected from the group consisting of melamine or its condensation products, preferably melam, melem, melon, urea, guanidine, morpholine and piperazine.

15. **Use** of a compound with formula (I), its corresponding ammonia salt, its corresponding phosphonate salt or a mixture of the aforementioned, as a flame retardant for providing a polymer material with flame retarding properties, in particular a thermoplastic polymer: 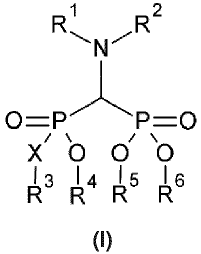 wherein
**(i) R¹** and **R²** are identical or different substituents and are selected from the group consisting of linear, branched or cyclic alkylene, alkenylene and alkinylene, unsubstituted and alkyl-substituted phenylene, mononuclear and multinuclear aromatics containing up to 4 nuclei, mononuclear or multinuclear heteroaromatics containing up to 4 nuclei, silylene, allyl, alkyl or aryl alcohols, or
**(ii) R¹** and **R²** together, including the N atom, form a saturated or monounsaturated or multiple-unsaturated heterocycle containing 4-8 ring atoms which are selected from carbon, oxygen, sulphur, phosphorus, silicon and nitrogen, wherein on the heterocycle, when it comprises nitrogen atoms as the ring atoms, these nitrogen atoms are substituted with H, an alkyl, an aryl or a methyl bisphosphonate group with the following structure (II): 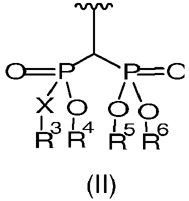 and wherein on the heterocycle, when it comprises carbon, phosphorus or silicon as the ring atoms, these atoms may have substituents selected from the group consisting of H, alkyl, aryl, -NH₂, -NHR, -NR₂, -OH, -OR, =O, -I, -Cl, -Br, in which R = alkyl, aryl,
and wherein **-X-** is an oxygen atom, **-O-, or -X-** is a **single bond,** and
wherein
**(i) R³**, **R⁴**, **R⁵** and **R⁶** are identical or different substituents and are selected from the group consisting of H, linear, branched or cyclic alkylene, alkenylene and alkinylene, unsubstituted and alkyl-substituted phenylene, multinuclear aromatics containing up to 4 nuclei, mononuclear or multinuclear heteroaromatics containing up to 4 nuclei, silylene, allyl, alkyl or aryl alcohols, cations, wherein the cation is Na⁺, K⁺, Mg²⁺, Ca²⁺, B³⁺, Al³⁺, Zn²⁺, NH₄⁺ or the ammonium ion of an amine compound selected from the group consisting of melamine or its condensation products, preferably melam, melem, melon, urea, guanidine, morpholine and piperazine, and/or
**(ii)** when **-X-** is an oxygen atom, **-O-,** -OR**³** and **-OR⁴** together and/or **-OR⁵** and **-OR⁶** together, including the P atom of the phosphonate group, form a cyclic phosphonic acid ester with a ring size of 4-10 atoms, and/or
**(iii)** when **-X-** is a single bond, **R³** and **-OR⁴** together, including the P atom of the phosphinate group, form a cyclic phosphinic acid ester with a ring size of 4-10 atoms and/or **-OR⁵** and **-OR⁶** together, including the P atom of the phosphonate group, form a cyclic phosphonic acid ester with a ring size of 4-10 atoms.

## Revendications

1. Composition comprenant un matériau polymère, en particulier un matériau polymère thermoplastique, et, contenu dans et/ou lié à celui-ci, un retardateur de flamme exempt d'halogène en une quantité de 1 à 40 % en poids par rapport à la composition totale, **caractérisée en ce que** le retardateur de flamme est un composé de formule (I), son sel d'ammonium correspondant, son sel de phosphonate correspondant ou un mélange de ceuxci : 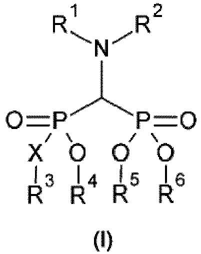
(i) R¹ et R² étant des substituants identiques ou différents et étant choisis dans le groupe constitué d'alkyles, d'alcényles et d'alcynyles linéaires, ramifiés ou cycliques, de phényles non substitués et substitués par des groupes alkyle, d'aromatiques mononucléaires et multinucléaires ayant jusqu'à 4 noyaux, d'hétéroaromatiques mononucléaires ou multinucléaires ayant jusqu'à 4 noyaux, de silylène, d'alcools allyliques, alkyliques ou aryliques, ou
(ii) R¹ et R² formant conjointement, y compris l'atome de N, un hétérocycle saturé ou mono-insaturé ou poly-insaturé ayant 4 à 8 atomes de cycle qui sont choisis parmi le carbone, l'oxygène, le soufre, le phosphore, le silicium et l'azote, à l'hétérocycle, lorsqu'il comprend des atomes d'azote en tant qu'atomes de cycle, ces atomes d'azote étant substitués par H, un groupe alkyle, un groupe aryle ou un groupe méthylbisphosphonate de la structure (II) suivante : 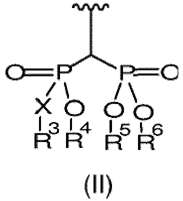 et à l'hétérocycle, lorsqu'il comprend du carbone du phosphore ou du silicium comme atomes de cycle, ces atomes pouvant comprendre des substituants choisis dans le groupe constitué par H, alkyle, aryle, -NH₂,-NHR, -NR₂, -OH, -OR, =O, -I, -Cl, -Br, avec R= alkyle, aryle,
et -X- étant un atome d'oxygène, -O-, ou -X- étant une liaison simple et
(i) R³, R⁴, R⁵ et R⁶ étant des substituants identiques ou différents et étant choisis dans le groupe constitué de H, d'alkyles d'alcényles et d'alcynyles linéaires, ramifiés ou cycliques, d'alcényles et d'alcynyles, de phényles non substitués et substitués par un alkyle, d'aromatiques multinucléaires ayant jusqu'à 4 noyaux, d'hétéroaromatiques mononucléaires ou multinucléaires ayant jusqu'à 4 noyaux, de silylène, d'alcools allyliques, alkyliques ou aryliques, de cations, le cation étant Na⁺, K⁺, Mg²⁺, Ca²⁺, B³⁺, Al³⁺, Zn²⁺, NH₄⁺ ou l'ion ammonium d'un composé d'amine choisi dans le groupe constitué de mélamine ou de ses produits de condensation, de préférence le mélam, le mélem, le mellon, l'urée, la guanidine, la morpholine et la pipérazine,
(ia) si R¹ et R² sont un méthyle, R³, R⁴, R⁵ et R⁶ étant des substituants identiques ou différents et étant choisis dans le groupe constitué d'alkyles d'alcényles et d'alcynyles linéaires, ramifiés ou cycliques, de phényles non substitués et substitués par un alkyle, d'aromatiques multinucléaires ayant jusqu'à 4 noyaux, d'hétéroaromatiques mononucléaires ou multinucléaires ayant jusqu'à 4 noyaux, de silylène, d'alcools allyliques, alkyliques ou aryliques, de cations, le cation étant Mg²⁺, Ca²⁺, B^{3 +}, Al³⁺, Zn²⁺, ou l'ion ammonium d'un composé d'amine choisi dans le groupe constitué de mélamine ou de ses produits de condensation, de préférence le mélam, le mélem, le mellon, l'urée, la guanidine, la morpholine et la pipérazine,
et/ou
(ii) si -X- est un atome d'oxygène, -O-, -OR³ et -OR⁴ conjointement et/ou -OR ⁵ et -OR⁶ conjointement, y compris l'atome de P du groupe phosphonate, formant un ester d'acide phosphonique cyclique ayant une taille de cycle de 4 à 10 atomes, et/ou
(iii) si -X- est une liaison simple, R³ et -OR⁴ conjointement, y compris l'atome de P du groupe phosphinate, formant un ester d'acide phosphonique cyclique ayant une taille de cycle de 4 à 10 atomes et/ou -OR⁵ et -OR⁶ conjointement, y compris l'atome de P du groupe phosphonate, formant un ester d'acide phosphonique cyclique ayant une taille de cycle de 4 à 10 atomes.

2. Composition selon la revendication 1, **caractérisée en ce que** R¹ et R² conjointement, y compris l'atome de N, forment un cycle de morpholine ou pipéridine.

3. Composition selon la revendication 1, **caractérisée en ce que** R¹ et R² sont des substituants identiques ou différents, au moins un des substituants étant la mélamine, les atomes d'azote des groupes amino étant substitués par H, un groupe alkyle, un groupe aryle ou un groupe méthylbisphosphonate de la structure (II) suivante :

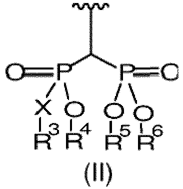

4. Composition selon l'une quelconque des revendications précédentes, **caractérisée en ce que** le retardateur de flamme sec atteint une perte de masse de 10 % en poids à partir d'une température de 320°C, de préférence à partir d'une température de 335°C, de manière particulièrement préférée à partir d'une température de 350°C, sec signifiant que la teneur en eau est < 0,5 % en poids et la perte de masse étant déterminée par thermogravimétrie sous atmosphère d'azote à une vitesse de chauffage de 10 K/min.

5. Composition selon l'une quelconque des revendications précédentes, **caractérisée en ce que** la teneur en phosphore du retardateur de flamme est d'au moins 19,5 % en poids, de préférence d'au moins 20 % en poids, de manière particulièrement préférée d'au moins 21,5 % en poids, de la manière la plus préférée d'au moins 23,5 % en poids.

6. Composition selon l'une quelconque des revendications précédentes, **caractérisée en ce qu'**au moins un, de manière préférée deux, de manière encore plus préférée au moins trois, de la manière la plus préférée quatre des groupes R³, R⁴, R⁵ et R⁶ sont un cation ou H, de manière préférée H, le cation étant Na⁺, K⁺, Mg²⁺, Ca²⁺, B³⁺, Al³⁺, Zn²⁺, NH₄⁺ ou l'ion ammonium d'un composé d'amine choisi dans le groupe constitué par la mélamine ou ses produits de condensation, de manière préférée le mélam, le mélem, le mellon, l'urée, la guanidine, la morpholine et la pipérazine.

7. Composition selon l'une quelconque des revendications précédentes, **caractérisée en ce qu'**au moins un des groupes R³, R⁴, R⁵ et R⁶ est un radical organique, chacun de ces radicaux organiques comprenant plus de trois atomes de carbone.

8. Composition selon l'une quelconque des revendications précédentes, **caractérisée en ce que** le matériau polymère est un thermoplastique choisi dans le groupe constitué par le polybutyral de vinyle (PVB), le polypropylène (PP), le polyéthylène (PE), le polyamide (PA), un polyester tel que le polybutylène téréphtalate (PBT), le polyéthylène téréphtalate (PET), le polyuréthane (PU), la polyurée, le polyoxyde de phénylène, le polyacétal, le polyacrylate, le polyméthacrylate, le polyoxyméthylène, le polyvinylacétal, le polystyrène, l'acrylonitrile-butadiène-styrène (ABS), l'acrylonitrile-styrène-acrylate (ASA), le polycarbonate, le polyéthersulfone, le polysulfonate, le polytétrafluoroéthylène, la polyurée, les résines de formaldéhyde, les résines de mélamine, la polyéthercétone, le polychlorure de vinyle, le polylactide, le polysiloxane, les résines de phénol, les résines époxy, le polyimide, le bismaléimide triazine, le polyuréthane thermoplastique, le copolymère d'éthylène-acétate de vinyle (EVA), des copolymères et/ou des mélanges desdits polymères.

9. Composition selon l'une quelconque des revendications précédentes, **caractérisée en ce que** le matériau polymère contient le retardateur de flamme en une quantité d'au moins 3 % en poids ou d'au moins 5 % en poids ou d'au moins 10 % en poids ou d'au moins 15 % en poids et/ou en une quantité d'au plus 35 % en poids ou d'au plus 30 % en poids ou d'au plus 25 % en poids par rapport à la composition totale.

10. Composition selon l'une quelconque des revendications précédentes, **caractérisée en ce qu'**elle comprend au moins un autre composant ignifuge qui est de préférence choisi parmi des bases azotées, des dérivés de mélamine, des phosphates, des pyrophosphates, des polyphosphates, des phosphinates organiques et inorganiques, des phosphonates organiques et inorganiques et des dérivés des composés cités ci-avant, de préférence choisis parmi le polyphosphate d'ammonium, des particules de polyphosphate d'ammonium revêtues et/ou revêtues et réticulées de mélamine, de résine de mélamine, de dérivés de mélamine, de silanes, de siloxanes, de silicones ou de polystyrènes, ainsi que des composés de 1,3,5-triazine, y compris la mélamine, le mélam, le mélem, le mellon, **l'amméline, l'ammélure, la 2-uréido-mélamine, la guanamine acétique, la guanamine benzoïque, le phényltriazine diaminé, les sels et ADDUCTS de mélamine, le cyanure de mélamine, le borure de mélamine, l'orthophosphate de mélamine, le pyrophosphate de mélamine, le dipyrophosphate de mélamine, le diéthylephosphinate d'aluminium, le polyphosphate de mélamine, les composés oligomères et polymères de 1,3,5-triazine et des polyphosphates de composés de 1,3,5-triazine,** la guanine, le phosphate de pipérazine, le polyphosphate de pipérazine, le phosphate d'éthylène diamine, le pentaérythritol, le dipentaérythritol, le phosphate de bore, l'isocyanurate de 1,3,5-trihydroxyéthyle, l'isocyanurate de 1,3,5-triglycidyle, de **l-isocyanurate trially** et des dérivés des composés cités ci-avant.

11. Composition selon l'une quelconque des revendications précédentes, **caractérisée en ce qu'**elle présente au moins une charge choisie parmi le carbonate de calcium, des silicates tels que le talc, l'argile ou le mica, la silice, le sulfate de calcium et de baryum, l'hydroxyde d'aluminium, des fibres de verre et des billes de verre ainsi que de la sciure de bois, de la poudre de cellulose et des suies et des graphites.

12. Composition selon l'une quelconque des revendications précédentes, **caractérisée en ce qu'**elle présente un matériau polymère en une quantité d'au moins 50 % en poids, de préférence d'au moins 70 % en poids, de manière particulièrement préférée d'au moins 80 % en poids et de la manière la plus préférée d'au moins 90 % en poids.

13. Procédé de préparation d'une composition selon le une quelconque des revendications précédentes, **caractérisé en ce que** le retardateur de flamme est un composant de co-condensation ou de co-addition du matériau polymère, qui est introduit dans le matériau polymère lors de la préparation du matériau polymère par polycondensation ou polyaddition, dans lequel le matériau polymère est de préférence un polyester ou un polyuréthane.

14. Retardateur de flamme tel que défini dans l'une quelconque des revendications précédentes, **caractérisé en ce qu'**au moins l'un des groupes R³, R⁴, R⁵ et R⁶ est H ou est un cation, dans lequel le cation est Na⁺, K ⁺, Mg²⁺, Ca²⁺, B³⁺, Al³⁺, Zn²⁺, NH₄⁺ ou l'ion ammonium d'un composé d'amine choisi dans le groupe constitué par la mélamine ou ses produits de condensation, de préférence le mélam, le mélem, le mellon, l'urée, la guanidine, la morpholine et la pipérazine.

15. Utilisation d'un composé de formule (I), de ses sels d'ammonium correspondants, de ses sels de phosphonate correspondants ou d'un mélange de ceux-ci comme retardateur de flamme pour un apprêtage ignifuge d'un matériau polymère, en particulier d'un polymère thermoplastique : 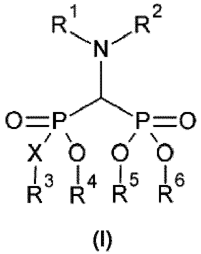
(i) R¹ et R² étant des substituants identiques ou différents et étant choisis dans le groupe constitué par des alkyles, des alcényles et des alcynyles linéaires, ramifiés ou cycliques, des phényles non substitués et substitués par un alkyle, des aromatiques mononucléaires et multinucléaires ayant jusqu'à 4 noyaux, des hétéroaromatiques mononucléaires ou multinucléaires ayant jusqu'à 4 noyaux, des silylènes, des alcools allyliques, alkyliques ou aryliques, ou
(ii) R¹ et R² formant conjointement, y compris l'atome de N, un hétérocycle saturé ou mono-insaturé ou poly-insaturé ayant 4 à 8 atomes de cycle qui sont choisis parmi le carbone, l'oxygène, le soufre, le phosphore, le silicium et l'azote, à l'hétérocycle, lorsqu'il comprend des atomes d'azote en tant qu'atomes de cycle, ces atomes d'azote étant substitués par H, un groupe alkyle, un groupe aryle ou un groupe méthylbisphosphonate de la structure (II) suivante, 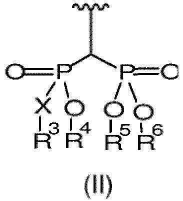 et à l'hétérocycle, lorsqu'il comprend du carbone du phosphore ou du silicium comme atomes de cycle, ces atomes pouvant comprendre des substituants choisis dans le groupe constitué par H, alkyle, aryle, -NH₂,-NHR, -NR₂, -OH, -OR, =O, -I, -Cl, -Br, avec R= alkyle, aryle,
et -X- étant un atome d'oxygène, -O-, ou -X- étant une liaison simple
et
(i) R³, R⁴, R⁵ et R⁶ étant des substituants identiques ou différents et étant choisis dans le groupe constitué de H, d'alkyles d'alcényles et d'alcynyles linéaires, ramifiés ou cycliques, d'alcényles et d'alcynyles, de phényles non substitués et substitués par un alkyle, d'aromatiques multinucléaires ayant jusqu'à 4 noyaux, d'hétéroaromatiques mononucléaires ou multinucléaires ayant jusqu'à 4 noyaux, de silylène, d'alcools allyliques, alkyliques ou aryliques, de cations, le cation étant Na⁺, K⁺, Mg²⁺, Ca²⁺, B³⁺, Al³⁺, Zn²⁺, NH₄⁺ ou l'ion ammonium d'un composé d'amine choisi dans le groupe constitué de mélamine ou de ses produits de condensation, de préférence le mélam, le mélem, le mellon, l'urée, la guanidine, la morpholine et la pipérazine,
et/ou
(ii) si -X- est un atome d'oxygène, -O-, -OR³ et -OR⁴ conjointement et/ou -OR⁵ et -OR⁶ conjointement, y compris l'atome de P du groupe phosphonate, formant un ester d'acide phosphonique cyclique ayant une taille de cycle de 4 à 10 atomes, et/ou
(iii) si -X- est une liaison simple, R³ et -OR⁴ conjointement, y compris l'atome de P du groupe phosphinate, formant un ester d'acide phosphonique cyclique ayant une taille de cycle de 4 à 10 atomes et/ou -OR⁵ et -OR⁶ conjointement, y compris l'atome de P du groupe phosphonate, formant un ester d'acide phosphonique cyclique ayant une taille de cycle de 4 à 10 atomes.
